(19)

Europäisches
Patentamt
European
Patent Office
Office européen
des brevets

(11) **EP 3 940 620 A1**

(12) **EUROPEAN PATENT APPLICATION**
published in accordance with Art. 153(4) EPC

(43) Date of publication:
**19.01.2022 Bulletin 2022/03**

(21) Application number: **20774839.3**

(22) Date of filing: **13.03.2020**

(51) International Patent Classification (IPC):
**G06Q 30/02** *(2012.01)* **H04W 4/021** *(2018.01)*

(52) Cooperative Patent Classification (CPC):
**G06Q 30/02; H04W 4/021**

(86) International application number:
**PCT/KR2020/003538**

(87) International publication number:
**WO 2020/189977 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2019 KR 20190030105**

(71) Applicant: **Samsung Electronics Co., Ltd.**
**Suwon-si, Gyeonggi-do 16677 (KR)**

(72) Inventors:
• **KANG, Daeho**
**Suwon-si Gyeonggi-do 16677 (KR)**

• **CHO, Sungrae**
**Suwon-si Gyeonggi-do 16677 (KR)**
• **KYUNG, Yeunwoong**
**Suwon-si Gyeonggi-do 16677 (KR)**
• **SEONG, Seonik**
**Suwon-si Gyeonggi-do 16677 (KR)**
• **YOO, Seungmin**
**Suwon-si Gyeonggi-do 16677 (KR)**
• **LIM, Chaiman**
**Suwon-si Gyeonggi-do 16677 (KR)**

(74) Representative: **Arnold & Siedsma**
**Bezuidenhoutseweg 57**
**2594 AC The Hague (NL)**

(54) **ELECTRONIC DEVICE AND METHOD FOR DYNAMIC GEOFENCING**

(57)    An electronic device according to one embodiment comprises a display, a communication circuit, at least one memory, and at least one processor. The at least one memory can store instructions which, when executed, instruct the at least one processor to: store, in the at least one memory, information about at least one marketing point of interest received from a first server through the communication circuit; identify, on the basis of first location information of the electronic device, at least one nearby marketing point of interest located near the electronic device among the at least one marketing point of interest; set, as a target geofence, a nearby marketing point of interest which satisfies a designated condition among the at least one nearby marketing point of interest; and display marketing information, corresponding to the target geofence, on the display in response to it being discerned that the electronic device has entered the target geofence. Other various embodiments are possible.

FIG.4

**Description**

[Technical Field]

The disclosure relates to an electronic device and a method for dynamic geofencing.

[Background Art]

Proximity-based marketing corresponds to a marketing strategy of directing users of electronic devices (for example, user terminals) geographically close to an advertiser to prompt consumption of the users of the electronic devices and increase sales of the advertiser by exposing, to a specific electronic device (for example, user terminal), marketing information such as advertisements, coupons, or menus which the advertiser provides in a specific area (for example, a marketing Point of Interest (POI)).

In proximity-based marketing, a process of determining proximity between the electronic device and the POI is referred to as geofencing. Geofencing may determine whether the electronic device is close to a marketing POI by checking a physical distance or a data similarity between location-related information measured by the electronic device (for example, latitude and longitude coordinates, a cell ID, or a Wi-Fi AP scan list) and location information representing the marketing POI (for example, latitude and longitude coordinates, a cell ID measured in the vicinity, or a Wi-Fi AP list measured in the vicinity). The determination about whether the electronic device is close to the marketing POI may be divided into a server-led scheme and a terminal-led scheme according to the location at which information on the marketing POI exists.

In the server-led scheme, the electronic device may transmit location-related information measured by itself (for example, latitude and longitude coordinates, a cell ID, or a Wi-Fi AP scan list) to a proximity-based marketing server, and the server may determine an adjacent area on the basis of the corresponding information and the location information of the marketing POI and perform marketing. However, in the terminal-led scheme, information on the marketing POI may be preconfigured in the terminal, and the terminal may measure location-related information without separate access to the server and determine whether the terminal is close to the marketing POI on the basis of the measurement result and the stored location information of the marketing POI.

[Detailed Description of the Invention]

[Technical Problem]

When performing geofencing to identify whether an electronic device (for example, a user terminal) is geographically in proximity to a marketing POI registered by an advertiser, the electronic device should measure the current location of the electronic device whenever geofencing is performed or should identify in real time whether the electronic device is in proximity to the marketing POI registered by the advertiser, so that power consumption or an amount of used data of the electronic device may significantly increase. Further, in general, the advertiser may have to pay more fees to an advertisement platform service provider (for example, a proximity-based marketing server) in proportion to options which can maximize marketing effects.

According to various embodiments, an electronic device and a method for dynamic geofencing may be provided to register or activate a geofence which can be configured by a service provision device for providing marketing information or configured by the electronic device on the basis of a predetermined condition.

According to various embodiments, an electronic device and a method for dynamic geofencing may be provided to register or activate at least one surrounding marketing POI located around the electronic device as a geofence on the basis of the predetermined condition.

[Technical Solution]

An electronic device according to various embodiments includes: a display; a communication circuit; at least one memory; and at least one processor, wherein the at least one memory stores instructions causing the at least one processor to, when executed, store information on at least one marketing Point of Interest (POI) received from a first server through the communication circuit in the at least one memory, identify at least one surrounding POI located around the electronic device among the at least one marketing POI, based on first location information of the electronic device, configure a surrounding marketing POI, which satisfies a predetermined condition, among the at least one surrounding marketing POI as a target geofence, and display marketing information corresponding to the target geofence on the display in response to identification of entry of the electronic device into the target geofence.

According to various embodiments, a method of performing dynamic geofencing by an electronic device includes: storing information on at least one marketing Point of Interest (POI) received from a first server in at least one memory through the electronic device; identifying at least one surrounding POI located around the electronic device among the at least one marketing POI, based on first location information of the electronic device; and displaying marketing information corresponding to the target geofence on a display in response to identification of entry of the electronic device into the target geofence.

According to various embodiments, a computer-readable recording medium for recording a program to be executed in a computer is provided. The program includes executable instructions causing a processor to, when executed by the processor, store information on at least one marketing Point of Interest (POI) received from a first server in at least one memory of the electronic device, identify at least one surrounding POI located around the electronic device among the at least one marketing POI, based on first location information of the electronic device, configure a surrounding marketing POI, which satisfies a predetermined condition, among the at least one surrounding marketing POI as a target geofence, and display marketing information corresponding to the target geofence on a display of the electronic device in response to identification of entry of the electronic device into the target geofence.

[Advantageous Effects]

According to various embodiments, an electronic device may register or activate a target geofence which can be configured by a service provision device for providing marketing information to the electronic device on the basis of a predetermined condition. Accordingly, an advertiser of the service provision device may configure various options which can maximize marketing effects with small costs on the basis of the predetermined condition to provide the marketing information.

According to various embodiments, since performance of geofencing for at least one geofence registered or activated on the basis of the predetermined condition among surrounding marketing POIs located around the electronic device may be managed on the basis of the location of the electronic device, the number of at least one target geofences based on the location of the electronic device may be effectively reduced. Accordingly, it is possible to significantly reduce power consumption or an amount of used data required whenever geofencing for the at least one target geofence is performed and minimize an overhead caused by unnecessary geofencing.

[Brief Description of Drawings]

FIG. 1 is a block diagram illustrating an electronic device within a network environment according to various embodiments;
FIG. 2 illustrates a dynamic geofencing system within a network environment according to various embodiments;
FIG. 3 illustrates information on a POI according to various embodiments;
FIG. 4 is a block diagram of an electronic device according to various embodiments;
FIG. 5 illustrates geofence information according to various embodiments;
FIG. 6 illustrates surrounding wireless infrastructure information detected by an electronic device according to various embodiments;
FIG. 7 illustrates a method of managing a target geofence for dynamic geofencing by an electronic device according to various embodiments;
FIG. 8 is a flowchart illustrating a method for dynamic geofencing by an electronic device according to various embodiments;
FIG. 9 is a flowchart illustrating a method for dynamic geofencing by an electronic device according to various embodiments;
FIG. 10 is a flowchart illustrating a method for dynamic geofencing by an electronic device according to various embodiments;
FIG. 11 is a flowchart illustrating a method for dynamic geofencing by an electronic device according to various embodiments;
FIG. 12 is a flowchart illustrating a method for dynamic geofencing by an electronic device according to various embodiments;
FIG. 13 is a flowchart illustrating a method for dynamic geofencing by an electronic device according to various embodiments;
FIG. 14 is a flowchart illustrating a method for dynamic geofencing by a first server according to various embodiments;
FIG. 15A is a flowchart illustrating a method for dynamic geofencing in a dynamic geofencing system according to various embodiments;
FIG. 15B is a flowchart illustrating a method for dynamic geofencing in a dynamic geofencing system according to various embodiments;

FIG. 16 illustrates a user interface for dynamic geofencing by an electronic device according to various embodiments; and

FIG. 17 illustrates a user interface for dynamic geofencing by an electronic device according to various embodiments.

[Mode for Carrying out the Invention]

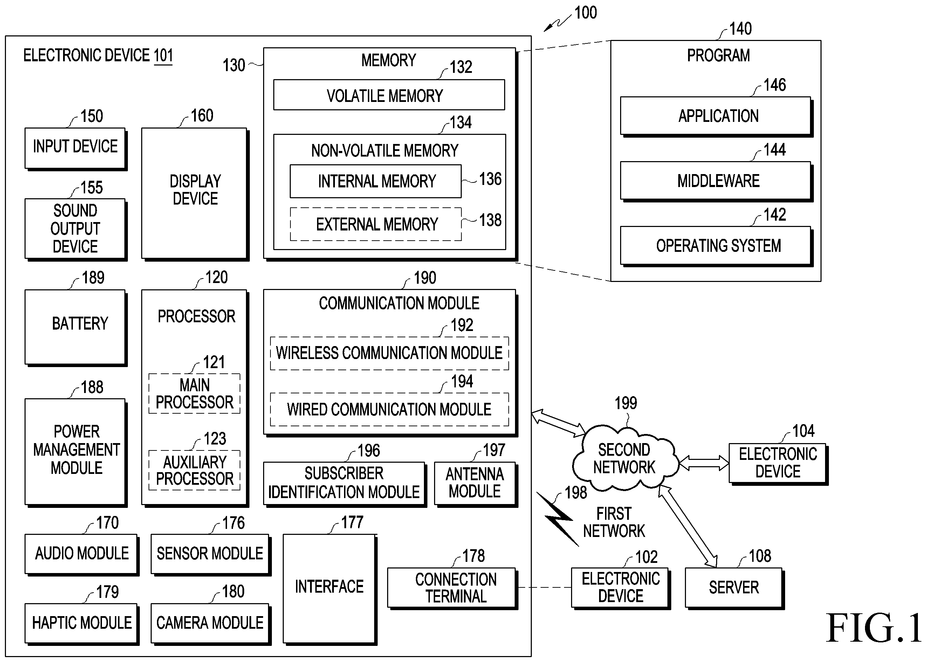

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by a component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g.,

commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

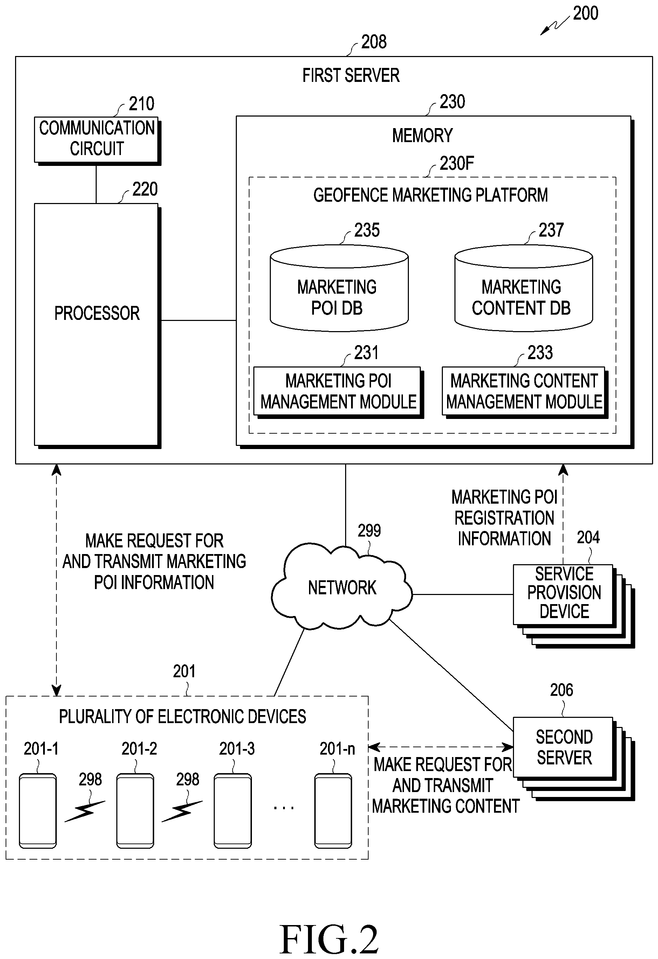

FIG. 2 is a diagram 200 illustrating a dynamic geofencing system within a network environment according to various embodiments.

Referring to FIG. 2, the dynamic geofencing system 200 may include at least one of a first server 208 (for example, the server 108 of FIG. 1) (for example, a proximity-based marketing server), a service provision device 204 (for example, the electronic device 104 of FIG. 1) (for example, an electronic device of an advertiser), or at least one electronic device 201, 201-1, 201-2, 201-3,..., 201-n (for example, the electronic device 101 of FIG. 1) (for example, a user terminal). The dynamic geofencing system 200 according to various embodiments may further include a second server 206 (for example, a marketing content server) capable of acquiring marketing information of at least one marketing POI or other marketing information related to at least one marketing item of the marketing information provided by the service provision device 204.

According to an embodiment, the first server 208, the service provision device 204, at least one electronic device 201, 201-1, 201-2, 201-3,..., 201-n, or the second server 206 may communicate with each other through a network 299 (for example, the second network 199 of FIG. 1) (for example, long-distance wireless communication).

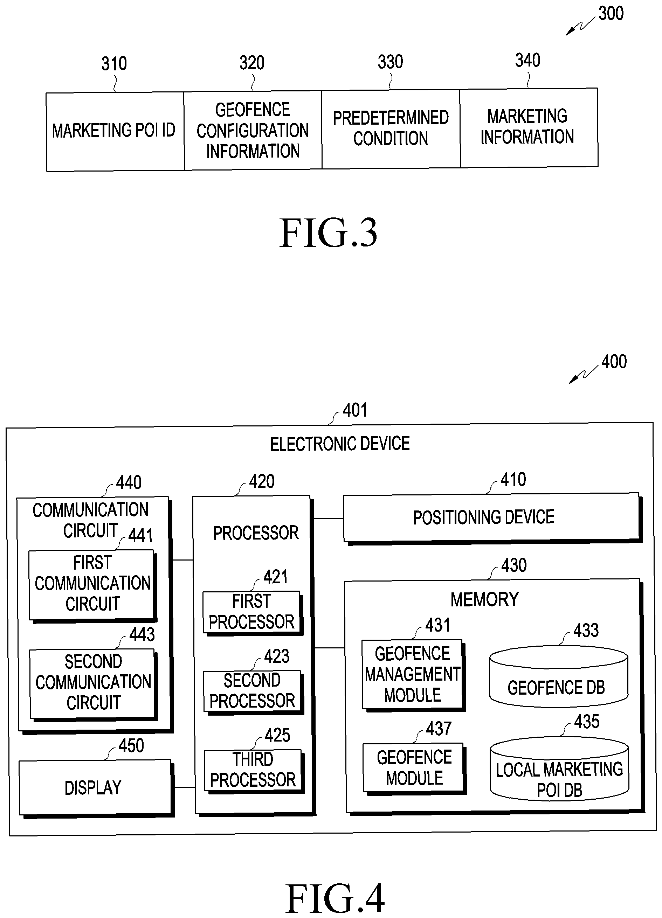

According to an embodiment, the service provision device 204 may register at least one marketing POI to provide marketing information in a geofence marketing platform 230F provided by the first server 280. The service provision device 204 may provide the marketing information of at least one marketing POI to at least one electronic device 201, 201-1, 201-2, 201-3,..., 201-n through the first server 208. For example, the service provision device 204 may register, in the first server 208, information (for example, marketing POI registration information) making a request for registering at least one marketing POI through a web portal or an application provided by the first server 208. According to an embodiment, the registration information (for example, marketing POI registration information) of the at least one POI may include at least one of identification information of the at least one marketing POI, geofence configuration information, a predetermined condition, or marketing information. The marketing POI registration information is described in more detail with reference to FIG. 3.

The first server 208 may receive registration information of at least one marketing POI (for example, marketing POI registration information) from the service provision device 240 and provide information on the at least one POI (for example, marketing POI information) to at least one electronic device 201, 201-1, 201-2, 201-3,..., 201-n which has agreed to use a proximity-based marketing service. According to an embodiment, the first server 208 may include at least one of a communication circuit 210, a processor 220, or a memory 230.

The memory 230 (for example, the memory 130 of FIG. 1) may store the geofence marketing platform 230F capable of providing various options according to a range, an exposure frequency, or a visibility level of consumer to whom marketing information of at least one marketing POI registered by the service provision device 204 is to be exposed. For example, the geofence marketing platform 230F may include at least one of a marketing POI management module 231 (hereinafter, referred to as a "marketing POI management module"), a marketing content management module 233, a marketing POI database (DB) 235 (hereinafter, referred as a "marketing POI DB"), or a marketing content database (DB) 237 (hereinafter, referred to as a "marketing content DB"). FIG. 2 illustrates that the marketing POI management module 231 or the marketing content management module 233 is stored in the geofence marketing platform 230F of the memory 230 as software, but is not limited thereto and may be configured in hardware such as a processor. For example, the marketing POI management module 231 or the marketing content management module 233 may be configured as the processor 220 or another separate processor. FIG. 2 illustrates that the marketing POI DB 235 and the marketing content DB 237 are separately configured, but are not limited thereto and may be integrated into one database.

The processor 220 of the first server 208 may register at least one marketing POI in the geofence marketing platform 230F of the memory 230 on the basis of registration information of the at least one marketing PPOI received from the service provision device 204. For example, the processor 220 of the first server 208 may register or store, in the marketing POI DB 235, the registration information of the at least one marketing POI (for example, marketing POI registration information) through the marketing POI management module 231.

The processor 220 of the first server 208 may collect surrounding wireless infrastructure information of the at least one marketing POI through the communication circuit 210 on the basis of location information of the at least one marketing POI. For example, the first server 208 may identify the location information of the at least one marketing POI included in the marketing POI registration information received from the service provision device 204. The first server 208 may identify the surrounding wireless infrastructure information stored in the marketing POI DB 235 on the basis of the location information.

According to an embodiment, the first server 208 may collect the surrounding wireless infrastructure information in a crowd sourcing form through an unspecified number of electronic devices (for example, the electronic device 201, 201-1, 202-2, 201-3,..., or 201-n). The first server 208 may periodically or aperiodically collect the surrounding wireless infrastructure information.

The first server 208 may register or store information on the at least one marketing POI (for example, marketing POI information) in the marketing POI DB 235 of the memory 230 on the basis of the marketing POI registration information or the surrounding wireless infrastructure information.

According to an embodiment, the marketing POI information may include the marketing POI registration information. According to an embodiment, the first server 208 may generate or reconfigure the marketing POI information through formats or configurations required by the marketing POI management module 231 on the basis of the marketing POI registration information or the surrounding wireless infrastructure information and register or store the same in the marketing POI DC 235. According to an embodiment, the first server 208 may periodically or aperiodically update the marketing POI DB 235 through the marketing POI management module 231 to continuously manage the same.

The first server 208 may register or store marketing information of the at least one marketing POI in the marketing content DB 237 of the memory 230 on the basis of the marketing POI registration information through the marketing content management module 233. According to an embodiment, the first server 208 may periodically or aperiodically update the marketing content DB 237 through the marketing content management module 233 to continuously manage the same.

The first server 208 may receive a message making a request for information on at least one marketing POI (for example, marketing POI information) from at least one electronic device 201, 201-1, 201-2, 201-3,..., or 201-n through the communication circuit 210. According to an embodiment, the request message may include location information of the at least one electronic device 201, 201-1, 201-2, 201-3,..., or 201-n.

The first server 208 may transmit the information on at least one marketing POI (for example, marketing POI information) to the at least one electronic device 201, 201-1, 201-2, 201-3,..., or 201-n through the communication circuit 210 in response to the request. For example, the first server 208 may identify at least one marketing POI corresponding to the location information from the marketing POI DB 235 or the marketing content DB 237 on the basis of the location information of the at least one electronic device 201, 201-1, 201-2, 201-3,..., or 201-n included in the request message and identify the information on at least one marketing POI (for example, marketing POI information). The first server 208 may transmit the information on at least one marketing POI (for example, marketing POI information) to the at least one electronic device 201, 201-1, 201-2, 201-3,..., or 201-n.

The at least one electronic device 201, 201-1, 201-2, 201-3,..., or 201-n may receive information on the at least one POI (for example, marketing POI information) from the first server 208 and, when a predetermined condition of the marketing POI information is satisfied, register or activate the same as a target geofence. For example, the at least one electronic device 201, 201-1, 201-2, 201-3,..., or 201-n may register or activate at least one surrounding marketing POI which satisfies the predetermined condition among at least one surrounding marketing POIs around the at least one electronic device 201, 201-1, 201-2, 201-3,..., or 201-n as at least one target geofence.

When it is identified that the at least one electronic device 201, 201-1, 201-2, 201-3,..., or 201-n enters the at least one registered or activated geofence on the basis of the location information of the at least one electronic device 201, 201-1, 201-2, 201-3,..., or 201-n, the at least one electronic device 201, 201-1, 201-2, 201-3,..., or 201-n may provide marketing information of the at least one registered or activated target geofence. For example, the marketing information may be output through at least one of a display (for example, the display device 160 of FIG. 1), an audio module (for example, the audio module 170 of FIG. 1), or a sound output device (for example, the sound output device 155 of FIG. 1) of the at least one electronic device 201, 201-1, 201-2, 201-3,..., or 201-n. For example, the marketing information may include at least one piece of visual data, audio data, or voice data.

FIG. 3 is a diagram 300 illustrating registration information of a marketing POI according to various embodiments.

Referring to FIG. 3, the registration information 300 of the marketing POI (for example, marketing POI registration information) according to various embodiments may be configured by a user (for example, advertiser) of the service provision device (service provision device 204 of FIG. 2) for at least one marketing POI. According to an embodiment, the marketing POI registration information 300 may include at least one of a marketing POI ID 310 corresponding to identification information of the marketing POI, geofence configuration information 320, a predetermined condition 330, or marketing information 340.

According to an embodiment, the marketing POI ID 310 may include, for example, a geographical or administrative name of each marketing POI, a business name, a word, a number, a symbol, or a combination thereof (for example, "business name 1_Gangnam branch_1").

According to an embodiment, the geofence configuration information 320 may include, for example, location information of a marketing POI including a location of each target of marketing (for example, a store or a building of the advertiser) or configuration information of the size of a geofence area. The location information may include, for example, a geographical or administrative address of each marketing POI, latitude and longitude coordinates (for example, standard latitude and longitude coordinates of a center of each marketing POI), or surrounding wireless infrastructure information. The surrounding wireless infrastructure information may include, for example, surrounding cell ID lists acquired from wireless communication signals around each marketing POI, surrounding Wi-Fi AP address lists (for example, Basic Service Set ID (BSSID)), or surrounding Bluetooth beacon address lists. The surrounding wireless infrastructure information may further include, for example, Received Signal Strength Indications (RSSIs) measured around each marketing POI (for example, an average value or an intermediate value of RSSIs measured in wireless communication signals) or operation frequency channels. The configuration information of the size of the geofence area may indicate, for example, a geofence range of each marketing POI and may be configured by the advertiser of the service provision device 204. The configuration information (for example, radius) of the size of the geofence may be, for example, dozens of meters [m] to hundreds of meters [m].

According to an embodiment, the predetermined condition 330 may indicate at least one condition for providing marketing information of each marketing POI to at least one electronic device 401 by the service provision device 204 and may be configured by the advertiser of the service provision device 204. The predetermined condition 330 may include, for example, a time duration, a frequency or number of times, a time interval, a device type, or a duplication prevention category predetermined for registering or activating the geofence of each marketing POI.

The time duration is to configure a time duration during which marketing information of each marketing POI can be received, and may include, for example, at least one of a predetermined user preference time, a predetermined proximity determination time, a predetermined start date, or a predetermined expiration date.

The frequency or number of times is to configure a frequency or number of times by which marketing information of each marketing POI can be received, and may include, for example, a predetermined frequency or number of times per predetermined unit time (for example, the permissible number of notifications of accumulated entries for one day) (for example, three times a day).

The time interval is to configure a time interval at which marketing information of each marketing POI can be provided, and may include, for example, a predetermined time interval (for example, a minimum time interval between event notifications) (for example, one hour).

The device type is to configure a limitation of a type of the electronic device (for example, the electronic device 201, 201-1, 201-2, 201-3,..., or 201-n of FIG. 2) capable of providing marketing information of each marketing POI, and may include, for example, a predetermined model name (for example, SM-G965N) or an ID.

The duplication prevention category is to configure a limitation of a category of marketing information in which marketing information of each marketing POI can be provided, and may include, for example, a predetermined duplication prevention category (for example, restaurant-bar category) for limiting duplication of the same or similar marketing information provided per predetermined unit time. For example, when marketing information of a restaurant category designated as the duplication prevention category is provided for a predetermined unit time (for example, one hour), marketing information of a bar category designated as the duplication prevention category of the restaurant category may not be provided for the predetermined unit time. The reverse is also possible.

The marketing information may include, for example, at least one marketing item (for example, coupon information, event information, advertisement information, a list of goods for sale, or URL information) for each marketing POI or an expiration date for the at least one marketing item. According to an embodiment, the marketing information may include at least one piece of visual data, audio data, or voice data.

FIG. 4 is a block diagram 400 illustrating an electronic device according to various embodiments.

Referring to FIG. 4, an electronic device 401 may include at least one of a positioning device 410, a processor 420, a memory 430, a communication circuit 440, or a display 450. FIG. 4 illustrates only elements related to an embodiment, but some of the elements may be omitted or integrated, or other elements may be further included as well as the elements. For example, the electronic device 401 of FIG. 4 may include some or all of the electronic device 101 illustrated in FIG. 1 or some or all of the electronic devices 201, 201-1, 201-2, 201-3,..., or 201-n illustrated in FIG. 2.

The positioning device 410 is a device for measuring a location of the electronic device 401, and may include, for example, at least one of a Global Positioning System (GPS), a Cellular-based Positioning Provider (CPP), or a mobility tracker (for example, a sensor-hub mobility tracker or a cell-based mobility tracker). For example, the CPP or the mobility tracker may operate with low power (for example, equal to or lower than 1 mA). The electronic device 401 may periodically or aperiodically acquire location information of the electronic device 401 through the positioning device 410. For example, the location information may include latitude and longitude coordinates.

The memory 430 (for example, the memory 130 of FIG. 1) may include at least one module or at least database (DB) for performing dynamic geofencing by the electronic device 401. According to an embodiment, the memory 430 may include at least one of a geofence management module 431, a geofence database (DB) 433 (hereinafter, referred to as a "geofence DB"), a local marketing POI database (DB) 435 (hereinafter, referred to as a "local marketing POI DB"), or a geofence module 437. FIG. 4 illustrates that the geofence management module 431 or the geofence module 437 is stored in the memory 430 as software, but is not limited thereto and may be configured in hardware as a processor. For example, the geofence management module 431 may be configured as a low power processor such as a sensor hub processor or another separate processor, and the geofence module 437 may be configured as at least one of an Application Processor (AP), a Communication Processor (CP), or another separate processor. FIG. 4 illustrates that the geofence DB 433 and the local marketing POI DB 435 are separately configured, but are not limited thereto and may be integrated into one database.

The geofence management module 431 may manage information on at least one geofence (for example, geofence information) stored in the geofence DB 433 and information on at least one marketing POI (for example, marketing POI information) stored in the local marketing POI DB 435.

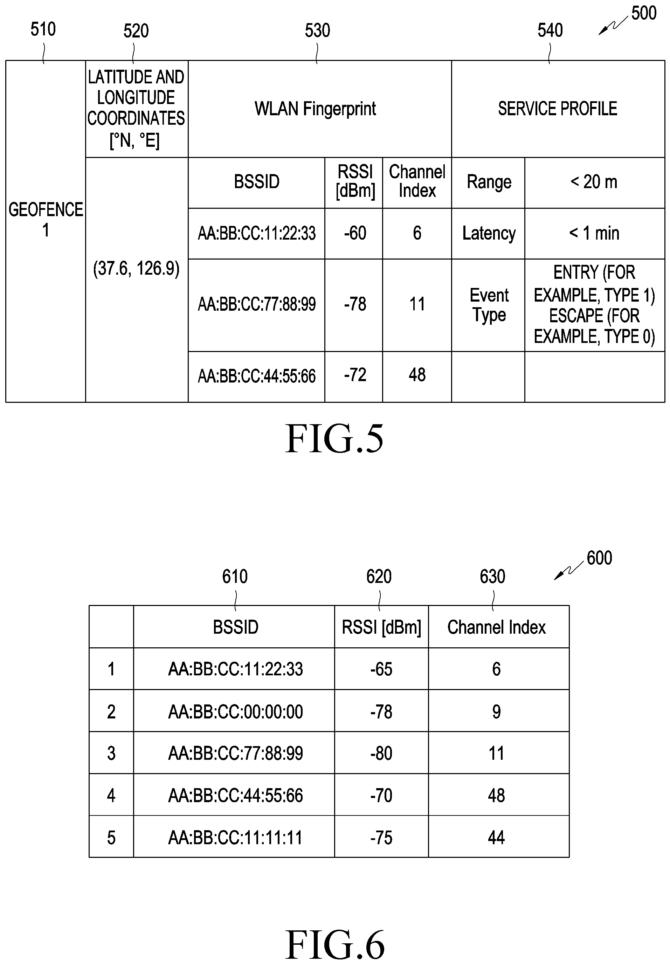

According to an embodiment, the geofence management module 431 may manage information on at least one geofence in which the electronic device 401 may perform geofencing. The geofence management module 431 may receive information on at least one geofence (for example, geofence information) from, for example at least one application, register the geofence information in the geofence DB 433 or delete, change, or update at least some of the geofence information on at least one geofence registered in the geofence DB 433 on the basis of surrounding wireless infrastructure information around the electronic device 401 periodically or aperiodically acquired by a geofencing operation performed through the geofence module 437, so as to continuously manage the geofence information. The geofence information may include, for example, at least some pieces of identification information (ID) of each geofence (for example, latitude and longitude coordinates), surrounding wireless infrastructure information (for example, WLAN fingerprint), or service profile information. The geofence information is described below in more detail with reference to FIG. 5.

According to an embodiment, the geofence management module 431 may manage a marketing POI to be activated or registered as a target geofence in the geofence DB 433 among at least one marketing POI stored in the local marketing POI DB 435 on the basis of location information of the electronic device 401. For example, the geofence management module 431 may manage the marketing POI such that at least one marketing POI corresponds to a plurality of geographical areas obtained by dividing the entire target marketing area into predetermined uniform sizes. The geofence management module 431 may manage the at least one marketing POI such that information on the at least one marketing POI corresponds to location information of the at least one marketing POI (for example, latitude and longitude coordinates of centers of respective marketing POIs) among the plurality of geographical areas and is stored in the local marketing POI DB 435. The geofence management module 431 may manage the at least one marketing POI to activate or register, in the geofence DB 433, a marketing POI which satisfies a predetermined condition of the at least one marketing POI among the at least one marketing POI stored in the local marketing POI DB 435 as a target geofence.

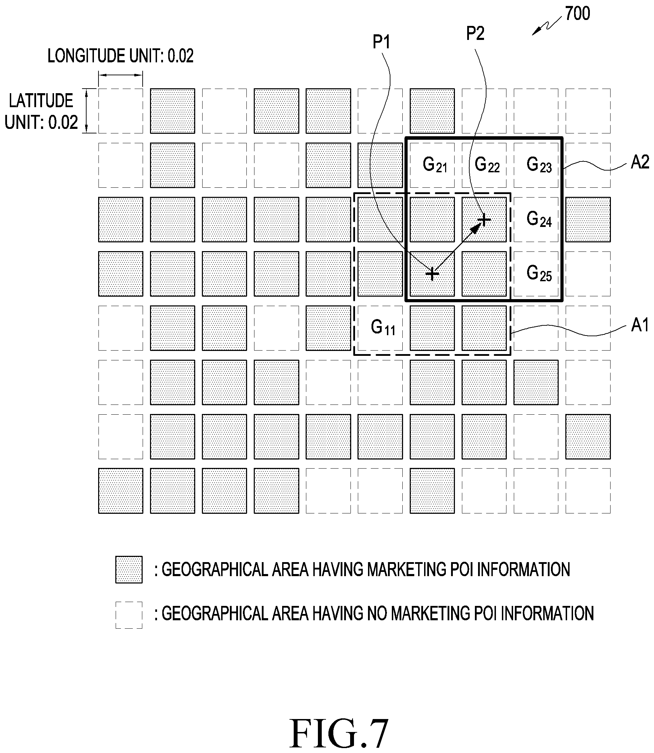

According to an embodiment, the plurality of geographical areas may be areas obtained by uniformly dividing the entire target marketing area at predetermined intervals (for example, intervals of 0.02 degrees on the basis of the latitude and longitude). Management of the at least one marketing POI by the geofence management module 431 in order to activate or register the at least one marketing POI in the geofence DB 433 as the target geofence is described below in more detail with reference to FIG. 7.

According to an embodiment, when at least one marketing POI is activated or registered as at least one target geofence by the geofence management module 431, the geofence module 437 may perform a proximity determination operation (for example, geofencing operation) for identifying whether the electronic device 401 enters the at least one target geofence. For example, the geofence module 437 may identify at least one of proximity, entry, or escape of the electronic device 401 with respect to the at least one target geofence on the basis of location information of the electronic device acquired through the positioning device 410 and geofence information on the at least one target geofence.

The communication circuit 440 (for example, the wireless communication module 192 of FIG. 1) may wireless transmit and receive signals or data without any connection with an external device (for example, the first server 208 or the second server 206 of FIG. 1) by a separate communication connector. When the at least one target geofence is registered or activated, the electronic device 401 may scan wireless communication signals around the electronic device 401 through the communication circuit 440. According to an embodiment, the communication circuit 440 may include a first communication circuit 441 or a second communication circuit 443. For example, the first communication circuit 441 may be, for example, a cellular communication circuit. For example, the second communication circuit 443 may be a short-range wireless communication circuit (for example, a Wi-Fi circuit or a Bluetooth circuit).

According to an embodiment, surrounding wireless infrastructure information may be acquired from the wireless communication signals around the electronic device 401 detected through the communication circuit 440. For example, the surrounding wireless infrastructure information may include at least one of an address list of the surrounding wireless communication signals (for example, a cell ID list or a Wi-Fi AP address list (for example, Basic Service Set ID (BSSID) or a Bluetooth beacon address list)), Received Signal Strength Indication (RSSI) values (for example, an average value or an intermediate value of RSSI values measured by the wireless communication signals), or operation frequency channels. The surrounding wireless infrastructure information may be acquired through the communication circuit 440 whenever the geofencing operation for determining whether the electronic device 401 enters the at least one target geofence is performed, and the acquired surrounding wireless infrastructure information may be stored and updated in the geofence DB 433 as information on the at least one target geofence (for example, geofence information).

When the electronic device 401 enters at least one target geofence activated or registered in the geofence DB 433 on the basis of location information of the electronic device 401, the display 450 (for example, the display device 160 of FIG. 1) may display marketing information included in information on at least one marketing POI (for example, marketing POI information) corresponding to the at least one target geofence. According to an embodiment, the marketing information may include at least one marketing item for each marketing POI (for example, coupon information, event information, advertisement information, a list of products for sale, or URL information) or an expiration date of the at least one marketing item.

The processor 420 (for example, the processor 120 of FIG. 1) may be electrically or operatively connected to the positioning device 410, the memory 430, the communication circuit 440, or the display 450 and may exchange signals (for example, commands or data) with each other. According to an embodiment, the processor 420 may include at least one of a first processor 421 (for example, the main processor 121 of FIG. 1 (for example, a central processing unit or an application processor)), a second processor 423 (for example, an auxiliary processor 123 of FIG. 1 (for example, a sensor hub processor or a low power processor)), or a third processor 423 (for example, the auxiliary processor 123 of FIG. 1 (for example, a communication processor)).

According to various embodiments, the processor 420 (for example, the second processor 423) may store information on at least one marketing POI (for example, marketing POI information) received from the first server (for example, the first server 208 of FIG. 2 (for example, a proximity-based marketing server)) through the communication circuit 440 in the memory 430 (for example, the local marketing POI DB 435).

According to an embodiment, the processor 420 (for example, the second processor 423) may register or store information on the at least one marketing POI (for example, marketing POI information) in the local marketing POI DB 435 of the memory 430 to make the marketing POI information correspond to at least one of a plurality of divided geographical areas having a predetermined size on the basis of location information included in the marketing POI information of each marketing POI received from the first server 208 by the geofence management module 431. The plurality of geographical areas may be obtained by uniformly dividing the entire marketing POI into predetermined sizes (for example, latitude and longitude coordinate units of 0.02 degrees), and each geographical area may have a unique identifier (for example, a unique index value converted on the basis of central location information of each geographical area (for example, central latitude and longitude coordinates)).

According to an embodiment, the processor 420 (for example, the second processor 423) may acquire first location information of the electronic device 401 through the positioning device 410 using the geofence management module 431. The processor 420 (for example, the second processor 423) may identify whether there is at least one first geographical area having no registration or storage history of information on the marketing POI among first geographical areas (AI) having a first size corresponding to first location information among the plurality of geographical areas. According to an embodiment, when there is at least one first geographical area, the processor 420 (for example, the second processor 423) may make a request for information on at least one marketing POI corresponding to the first location information or first central location information of the at least one first geographical area to the first server 208.

According to an embodiment, the processor 420 (for example, the second processor 423) may perform registration and storage in the local marketing POI DB 435 such that information on at least one marketing POI (for example, marketing POI information) corresponding to the first location information or the first central location information received from the first server 208 through the communication circuit 444 corresponds to the at least one first geographical area so as to perform an update in response to the request.

A method of managing at least one marketing POI to be registered or activated as at least one target geofence using the plurality of geographical areas is described below in more detail with reference to FIG. 7.

According to various embodiments, the processor 420 (for example, the second processor 423) may identify at least one surrounding marketing POI around the electronic device 401 among the at least one marketing POI on the basis of the first location information of the electronic device 401.

According to an embodiment, the processor 420 (for example, the second processor 423) may identify that at least one marketing POI corresponding to geographical areas having the first size (for example, first geographical areas) corresponding to the first location information among the plurality of geographical areas from the location marketing POI DB 435 is the at least one surrounding marketing POI located around the electronic device 401 through the geofence management module 431.

According to various embodiments, the processor 420 (for example, the second processor 423) may configure a surrounding marketing POI which satisfies a predetermined condition among the at least one surrounding marketing POI as a target geofence.

According to an embodiment, the processor 420 (for example, the second processor 423) may identify a predetermined condition included in information on the at least one surrounding marketing POI (for example, marketing POI information) from the local marketing POI DB 435 through the geofence management module 431. The processor 420 (for example, the second processor 423) may identify whether the surrounding marketing POI among the at least one surrounding marketing POI satisfies the predetermined condition.

According to an embodiment, the predetermined condition may be configured by a service provision device (for example, the service provision device 204 of FIG. 2) (for example, an electronic device of an advertiser) making a request for registering each marketing POI to the first server208. For example, the predetermined condition configured by the service provision device 204 may include at least one of a time period, a frequency or number of times, a time interval, a device type, or a duplication prevention category, designated to perform registration or activation of a target geofence for each marketing POI. A detailed description of the predetermined condition configured by the service provision device 204 is replaced with a description of the marketing POI registration information 300 of FIG. 3 (for example, the predetermined condition 330 of FIG. 3).

According to an embodiment, the predetermined condition may be configured by a user of the electronic device 401. For example, the predetermined condition configured by the electronic device 401 may include at least one of a time period, a frequency or number of times, a time interval, a duplication prevention category, a preferred category, or the number of payment histories, designated to perform registration or activation of a target geofence for each marketing POI.

The time period is to configure a time period in which marketing information of each marketing POI can be received, and may include, for example, at least one of a predetermined user preference time, a predetermined proximity determination time, a predetermined start day, or a predetermined end day.

The frequency or number of times is to configure a frequency or number of times by which marketing information of each marketing POI can be received, and may include, for example, a predetermined frequency or number of times per predetermined unit (for example, the permissible number of notifications of accumulated entries for one day) (for example, three times a day).

The time interval is to configure a time interval at which marketing information of each marketing POI can be received, and may include, for example, a predetermined time interval (for example, a minimum time interval between entry event notifications) (for example, one hour).

The duplication prevention category is to configure a limitation of a category of marketing information in which marketing information of each marketing POI can be received, and may include, for example, a predetermined duplication prevention category (for example, restaurant-bar category) for limiting duplication of the same or similar marketing information provided per predetermined unit time. For example, when marketing information of a restaurant category designated as the duplication prevention category is received for a predetermined unit time (for example, one hour), marketing information of a bar category designated as the duplication prevention category of the restaurant category may not be received for the predetermined unit time. The reverse is also possible.

The preferred category is to configure a category according to a user preference, and may include, for example, preferred categories designated by the user (for example, a restaurant, a store, a brand, or a product).

The number of payment histories is to configure a condition according to a purchase pattern of the user, and may include a predetermined number of payment histories (for example, three times or more) designated for each category (for example, a restaurant, a store, a brand, or a product).

According to an embodiment, when both the predetermined condition configured by the service provision device 204 and the predetermined condition configured by the electronic device 401 are configured, the processor 420 (for example, the second processor 423) may activate or register at least one marketing POI which satisfies all of the two predetermined conditions in the memory 430 (for example, the geofence DB 433) as the at least one target geofence. For example, when a time period (for example, PM 3 to PM 8) is configured as the predetermined condition configured by the service provision device 204 and a time period (for example, PM 5 to PM 11) is configured as the predetermined condition configured by the electronic device 401 for at least one marketing POI, the processor 420 (for example, the second processor 423) may use a time period (for example, PM 5 to PM 8) belonging to all of the two time periods as the predetermined condition.

According to an embodiment, when the surrounding marketing POI among the at least one surrounding marketing POI satisfies the predetermined condition, the processor 420 (for example, the second processor 423) may identify whether the surrounding marketing POI has a history of being registered or stored as the target geofence from the geofence DB 433 through the geofence management module 431.

For example, when the surrounding marketing POI has no history of being registered or stored as the target geofence, the processor 420 (for example, the second processor 423) may register the surrounding marketing POI as the target geofence in the geofence DB 433 and configure (for example, "flag 1") the same to be activated. For example, the processor 420 (for example, the processor 423) may generate or reconfigure information on the target geofence (for example, geofence information) to have a format or configurations required by the geofence management module 431 on the basis of the information on the surrounding marketing POI (for example, marketing POI information). The geofence information may include, for example, at least some of identification information of each geofence, surrounding wireless infrastructure information (for example, a BSSID of a surrounding wireless communication signal, an RSSI value (for example, an average value or an intermediate value of RSSI values measured by the wireless communication signals), or an operation frequency channel), or service profile information. The geofence information is described below in more detail with reference to FIG. 5.

For example, when the surrounding marketing POI has a history of being registered or stored as the geofence, the processor 420 (for example, the second processor 423) may configure (for example, "flag 1") the geofence registered or stored in the geofence DB 433 corresponding to the surrounding marketing POI to be activated as the target geofence.

According to an embodiment, the processor 420 (for example, the second processor 423) may identify whether the predetermined condition for the target geofence ends after the surrounding marketing POI is registered or activated as the target geofence and, when the predetermined condition for the geofence ends, configure the target geofence to be deactivated (for example, "flag 0").

According to various embodiments, when it is identified that the electronic device 401 enters the target geofence, the processor 420 (for example, the first processor 421 or the third processor 425) may provide marketing information corresponding to the target geofence.

According to an embodiment, the processor 420 (for example, the third processor 425) may identify whether the electronic device 401 enters the target geofence activated or registered in the geofence DB 433 through the geofence module 437. For example, when the target geofence is activated or registered in the geofence DB 433, the processor 420 (for example, the third processor 425) may identify information on the target geofence (for example, geofence information 500 of FIG. 5) from the geofence DB 433 and acquire surrounding wireless infrastructure information (for example, surrounding wireless infrastructure information 600 of FIG. 6) from wireless communication signals around the electronic device 401 through the communication circuit 440. According to an embodiment, the surrounding wireless infrastructure 600 may include at least one of an address list of the surrounding wireless communication signals (for example, a cell ID list, a Wi-Fi AP address list (for example, a BSSID), or a Bluetooth beacon address list), RSSI values (for example, an average value or an intermediate value of RSSI values measured by the wireless communication signals), or operation frequency channels. The processor 420 (for example, the third processor 425) may identify at least one of proximity, entry, or escape of the electronic device 401 with respect to the target geofence on the basis of the identified geofence information and the acquired surrounding wireless infrastructure information 600.

For example, the processor 420 (for example, the third processor 425) may compare the identified geofence information 500 and the acquired surrounding wireless infrastructure information 600, identify whether at least one of the address lists, the RSSI values (for example, the average value or the intermediate value of the RSSI values measured by the wireless communication signals), or the operation frequency channels matches, and identify whether a geofence event (for example, entry or escape) of the electronic device 401 for the target geofence is generated on the basis of the number of matched address lists, RSSI values (for example, the average value or the intermediate value of the RSSI values measured by the wireless communication signals), or operation frequency channels. For example, when surrounding address lists larger than or equal to a predetermined number of address lists among the surrounding address lists included in the identified geofence information 500 match the surrounding address lists included in the acquired surrounding wireless infrastructure information 600, the processor 420 (for example, the third processor 425) may identify that the electronic device 401 enters the target geofence. In this case, the processor 420 (for example, the third processor 425) may identify that a geofence event (for example, "entry") is generated and may indicate a geofence event type, for example, as "type 1". When surrounding address lists smaller than a predetermined number of address lists among the surrounding address lists included in the identified geofence information 500 match the surrounding address lists included in the acquired surrounding wireless infrastructure information 600, the processor 420 (for example, the third processor 425) may identify that the electronic device 401 approaches the target geofence. When there is no matched address list between the surrounding address lists included in the identified geofence information 500 and the surrounding address lists included in the acquired surrounding wireless infrastructure information 600, the processor 420 (for example, the third processor 425) may identify that the electronic device 401 does not enter or approach the target geofence in which case the geofence event is not generated. After the entry into the target geofence is identified, the processor 420 (for example, the third processor 425) may identify again or acquire the geofence information 500 of the target geofence or the surrounding wireless infrastructure information 600 on the basis of a predetermined condition of the target geofence (for example, a frequency or number of times, or a time interval). The processor 420 (for example, the third processor 425) may compare the address lists of the geofence information 500 and the address lists of the surrounding wireless infrastructure information 600 on the basis of the again identified or acquired geofence information 500 and the surrounding wireless infrastructure information 600 and, when there is no matched address list on the basis of the comparison result, identify that the electronic device escapes from the target geofence into which the electronic device had entered. In this case, the processor 420 (for example, the third processor 425) may identify that a geofence event (for example, "escape") is generated and indicate a geofence event type, as "type 0".

According to an embodiment, the processor 420 (for example, the third processor 425) may identify whether the electronic device 401 approaches, enters, or escapes the target geofence on the basis of location information 520 (for example, central latitude and longitude coordinates of the target geofence) of the identified geofence information 500 and location information (for example, latitude and longitude coordinates) of the electronic device 401 acquired through the positioning device (for example, the positioning device 410 of FIG. 4).

According to an embodiment, when it is identified that the electronic device 401 enters the at least one target geofence, the processor 420 (for example, the first processor 421) may identify marketing information included in information on a marketing POI (for example, marketing POI information) corresponding to the target geofence in the local marketing POI DB 435 of the memory 430 and provide the marketing information.

According to various embodiments, the processor 420 (for example, the first processor 421) may identify whether an expiration date included in the marketing information has passed. According to an embodiment, the marketing information may include at least one marketing item for the marketing POI corresponding to the target POI (for example, at least some of coupon information, event information, advertisement information, a list of products for sale, or URL information) or an expiration date of the at least one marketing item. When it is identified that the expiration date has passed, the processor 420 (for example, the first processor 421) may make a request for marketing information corresponding to the target geofence of which the expiration date has passed to the first server 208 or the second server 206 (for example, a content server) through the communication circuit 440 and receive the marketing information corresponding to the target geofence of which the expiration date has passed from the first server 208 or the second server 206 (for example, a marketing content server) through the communication circuit 440 in response to the request. The processor 420 (for example, the first processor 421) may store the received marketing information in the information on the surrounding marketing POI corresponding to the target geofence in the local marketing POI DB 435 and update the local marketing POI DB 435.

According to various embodiments, the processor 420 (for example, the first processor 421) may provide the received marketing information or the marketing information corresponding to the target geofence stored in the local marketing POI DB 435. According to an embodiment, the processor 420 (for example, the first processor 421) may display the marketing data on the display 450. For example, the marketing information may include visual data. According to an embodiment, the marketing information may include at least one piece of audio data or voice data. The processor 420 (for example, the first processor 421) may output the marketing information through at least one of an audio module (for example, the audio module 170 of FIG. 1) or a sound output device (for example, the sound output device 155 of FIG. 1 (for example, a speaker or a headphone)).

According to various embodiments, the processor 420 (for example, the second processor 423) may store or register information on at least one marketing POI (for example, marketing POI information) to correspond to at least one geographical area among a plurality of uniformly divided geographical areas having a predetermined size in the marketing POI DB 435 on the basis of location information of at least one marketing POI through the geofence management module 431.

According to various embodiments, when movement of the electronic device 401 is generated using the geofence management module 431, the processor 420 (for example, the second processor 423) may identify again at least one surrounding marketing POI located around the electronic device 401 on the basis of location information of the moved electronic device 401, make a request for information on the at least one surrounding marketing POI to the first server 208, and receive the information, so as to update the local marketing POI DB 435.

According to various embodiments, the electronic device 401 may include the display 450, the communication circuit 440, at least one memory 430, and at least one processor 420, wherein the at least one memory 430 may store instructions causing the at least one processor 420 to, when executed, store information on at least one marketing Point of Interest (POI) received from the first server 208 through the communication circuit 440 in the at least one memory 430, identify at least one surrounding POI located around the electronic device 401 among the at least one marketing POI on the basis of first location information of the electronic device 401, configure a surrounding marketing POI, which satisfies a predetermined condition, among the at least one surrounding marketing POI as a target geofence, and display marketing information corresponding to the target geofence on the display 450 in response to identification of entry of the electronic device 401 into the target geofence.

According to various embodiments, the information on the at least one marketing POI may include at least some pieces of identification information of each marketing POI, geofence configuration information, a predetermined condition, or marketing information.

According to various embodiments, the predetermined condition may include at least one of a time period, a frequency or number of times, a time interval, a device type, or a duplication prevention category, designated to register or activate the target geofence for each marketing POI.

According to various embodiments, the instructions may cause the at least one processor 420 to identify whether the surrounding marketing POI satisfies the predetermined condition among the at least one surrounding marketing POI, identify whether the surrounding marketing POI has a history of being registered or stored as a geofence in the at least one memory 430 when the marketing POI satisfies the predetermined condition, configure activation of the surrounding marketing POI as the target geofence when the surrounding marketing POI has the history of being registered or stored as the geofence, and configure registration and activation of the surrounding marketing POI in the at least one memory 430 as the geofence when the surrounding marketing POI has no history of being registered or stored as the geofence.

According to various embodiments, the instructions may cause the at least one processor 420 to identify whether the predetermined condition for the target geofence ends after the surrounding marketing POI is activated as the target geofence and, when the end of the predetermined condition for the target geofence is identified, configure deactivation of the target geofence.

According to various embodiments, the instructions may cause the at least one processor 420 to identify whether the electronic device 401 enters the target geofence and, when the electronic device 401 enters the target geofence, identify the marketing information included in information on the surrounding marketing POI corresponding to the target geofence and display the marketing information on the display 450.

According to various embodiments, the instructions may cause the at least one processor 420 to identify whether an expiration date included in the marketing information has passed and, when it is identified that the expiration date has passed, make a request for marketing information corresponding to the target geofence of which an expiration date has passed to the first server 208 or the second server 206 through the communication circuit 440 and receive the marketing information corresponding to the target geofence of which the expiration date has passed from the first server 208 or the second server 206 through the communication circuit 440 in response to the request.

According to various embodiments, the instructions may cause the at least one processor 420 to store information on the at least one marketing POI in the at least one memory to correspond to a plurality of geographical areas divided to have a predetermined size on the basis of location information of the at least one marketing POI.

According to various embodiments, the instructions may cause the at least one processor 420 to identify whether there is at least one first geographical area having no registration history of information on a marketing POI within first geographical areas having a first size corresponding to the first location information among the plurality of geographical areas, make a request for information on at least one marketing POI corresponding to the first location information or first central location information of the at least one first geographical area to the first server 208 through the communication circuit when there is at least one first geographical area, and, in response to the request, update the at least one memory 430 by registering or storing information on at least one marketing POI corresponding to the first location information or the first central location information of the at least one first geographical area received from the first server 208 to make the information on the at least one marketing POI correspond to the at least one first geographical area.

According to various embodiments, the instructions may cause the at least one processor 420 to acquire second location information of the electronic device 401, identify whether the electronic device 401 moves within the plurality of geographical areas on the basis of the first location information and the second location information, identify whether there is at least one second geographical area having no registration history of information on a marketing POI within second geographical areas having a second size corresponding to the second location information among the plurality of geographical areas when the movement is identified, make a request for information on at least one marketing POI corresponding to the second location information or second central location information of the at least one second geographical area to the first server 208 through the communication circuit 440 when there is at least one second geographical area, and, in response to the request, update the at least one memory 430 by registering the information on the at least one marketing POI corresponding to the second location information or the second central location information received from the first server 208 to make the information on the at least one marketing POI correspond to the at least one second geographical area.

According to various embodiments, in a description of the processor 420, each operation of the processor 420 has been described by one of the first processor 421, the second processor 423, and the third processor 425, but is not limited thereto and each operation of the processor 420 may be performed by one integrated processor or a processor other than the described processors separated for the respective operations. The processor 420 according to various embodiments is described in more detail with reference to FIGs. 5 to 13 below.

FIG. 5 is a diagram 500 illustrating geofence information according to various embodiments.

Referring to FIG. 5, the geofence information 500 according to various embodiments may include at least some of geofence identification information (ID) 510, location information 520, surrounding wireless infrastructure information 530, or service profile information 540.

According to an embodiment, the geofence information 500 may be configured by a user of the electronic device (for example, the electronic device 401 of FIG. 4). For example, the electronic device 401 may register or store, in a geofence DB (geofence DB 433 of FIG. 4), the geofence information 500 configured by the user for at least one geofence through at least one application (for example, the geofence management module 431 of FIG. 4).

According to an embodiment, the geofence information 500 may generate or reconfigure at least one marketing POI to be configured as at least one target geofence to have a format or configurations required by the geofence module 437 and register or store the same in the geofence DB 433 on the basis of information on at least one marketing POI (for example, marketing POI information) received from the first server 208 through the communication circuit 440 or stored in the local marketing POI DB 435 by the geofence management module 431.

According to an embodiment, the geofence identification information (ID) 510 (for example, "geofence 1") is to identify the corresponding geofence and may include, for example, a geographical or administrative name, a word, a number, or a symbol corresponding to the corresponding geofence, or a combination thereof. For example, the geofence identification information (ID) 510 may include a geographical or administrative name for a point selected by the user or identification information (for example, the marketing POI ID 310 of FIG. 3) included in information on at least one marketing POI (for example, the marketing POI information 300 of FIG. 3) to be configured as the target geofence.

According to an embodiment, the location information 520 may include at least one of a geographical or administrative address, or latitude and longitude coordinates of the corresponding geofence. For example, the location information may include a geographical or administrative address, latitude and longitude coordinates of a point selected by the user, or location information in geofence configuration information 320 included in information on at least one marketing POI (for example, the marketing POI information 300 of FIG. 3) to be configured as the target geofence.

According to an embodiment, the surrounding wireless infrastructure information 530 may include information which can be scanned by the electronic device 401 in the vicinity of the POI configured as the target geofence. According to an embodiment, the surrounding wireless infrastructure information 530 may include at least one of an address list of wireless communication signals around the electronic device 401 (for example, a cell ID list, a Wi-Fi AP address list (for example, a BSSID), or a Bluetooth beacon address list), RSSI values (for example, an average value or an intermediate value of RSSI values measured by the wireless communication signals), or operation frequency channels. For example, the surrounding wireless infrastructure information 530 may include surrounding wireless infrastructure information of a point selected by the user or surrounding wireless infrastructure information in the geofence configuration information 320 included in information on at least one marketing POI (for example, the marketing POI information 300 of FIG. 3) to be configured as the target geofence.

According to an embodiment, the service profile information may include at least one of a geofence range of the corresponding geofence, a geofence detection latency, or a geofence event type (for example, entry or escape).

The geofence range may indicate the size of an area of the corresponding geofence. According to an embodiment, the geofence range may be configured by a user or may be automatically configured on the basis of geofence area size configuration information (for example, radius) in the geofence configuration information 320 included in information on at least one marketing POI (for example, the marketing POI information 300 of FIG. 3) to be registered as the geofence.

The geofence detection latency may indicate a detection interval of surrounding wireless infrastructure information of the corresponding geofence. According to an embodiment, the geofence detection latency may be configured by the user or may be automatically configured on the basis of the predetermined condition 330 (for example, the frequency or number of times, or the time interval, designated to perform registration or activation as the target geofence) included in information on at least one marketing POI (for example, the marketing POI information 300 of FIG. 3) to be configured as the target geofence.

The geofence event type may indicate a state of the electronic device (for example, entry or escape) for the corresponding geofence. For example, when the electronic device 401 is configured to register or activate (for example, "flag 1") at least one target geofence in the geofence DB 433 through the geofence management module 431, a geofence operation for determining whether the electronic device 401 enters the at least one target geofence may be performed. When it is determined that the electronic device 401 enters at least one registered or activated target geofence on the basis of the geofencing result, the electronic device 401 may identify that a geofence event (for example, "entry") is generated, and the geofence event type may be indicated as, for example, "type 1". When it is determined that the electronic device 401 escapes from at least one registered or activated target geofence, the electronic device 401 may identify that a geofence event (for example, "escape") is generated, and the geofence event type may be indicated as, for example, "type 0". When it is identified the electronic device 401 escapes (for example, type 0) from at least one activated geofence, the electronic device 401 may deactivate (for example, "flag 0") the activated geofence.

FIG. 6 is a diagram 600 illustrating surrounding wireless infrastructure information detected by an electronic device according to various embodiments.

Referring to FIG. 6, the surrounding wireless infrastructure information 600 detected by the electronic device (for example, the electronic device 401 of FIG. 4) according to various embodiments indicates information acquired from wireless communication signals measured around the electronic device 401 when geofencing for at least one target geofence is performed.

According to an embodiment, the surrounding wireless infrastructure information 600 may include at least one of address lists 610 of wireless communication signals around the electronic device 401, Received Signal Strength Indication (RSSI) values 620 (for example, an average value or an intermediate value of RSSI values measured by the wireless communication signals,), or operation frequency channels 630. The address lists 610 may include, for example, at least one of cell ID lists of the wireless communication signals around the electronic device 401, Wi-Fi AP address lists (for example, Basic Service Set ID (BSSID)), or Bluetooth beacon address lists.

According to an embodiment, when it is configured to activate or register at least one target geofence in a geofence DB (for example, the geofence DB 433 of FIG. 4) of the electronic device 401, the surrounding wireless infrastructure information 600 may be used to identify whether a geofence event (for example, entry or escape) for the at least one target geofence is generated. For example, the electronic device 401 may identify whether the electronic device 401 enters or escapes from the at least one target geofence on the basis of geofence information (for example, the geofence information 500 of FIG. 5) of the at least one target geofence and the surrounding wireless infrastructure information 600. For example, the electronic device 401 may compare address lists (for example, BSSID) of the geofence information 500 and address lists 610 (for example, BSSID) of the surrounding wireless infrastructure information 600. For example, when address lists larger than or equal to a predetermined number match on the basis of the comparison result (for example, "AA:BB:CC:11:22;33" of BSSID 1, "AA:BB:CC:77:88;99" of BSSID 3, and "AA:BB:CC:44:55;66" of BSSID 4 in FIG. 6), the electronic device 401 may identify that the electronic device 401 has entered the at least one target geofence. In this case, the electronic device 401 may identify that the geofence event (for example, "entry") is generated and may indicate a geofence event type, for example, as "type 1". For example, when address lists smaller than the predetermined number match among the address lists included in the geofence information 500 on the basis of the comparison result, the electronic device 401 may identify the electronic device 401 approaches the at least one target geofence. For example, when there are no address lists matching each other on the basis of the comparison result, the electronic device 401 may identify that the electronic device 401 has not entered or approached the at least one target geofence in which case the geofence event is not generated. For example, after identifying the entry into the at least one target geofence, the electronic device 401 may identify again or acquire the geofence information 500 or the surrounding infrastructure information 600 on the basis of a predetermined condition of the at least one target geofence (for example, a frequency or number of times, or a time interval). The electronic device 401 may compare the address lists (for example, BSSID) of the geofence information 500 and the address lists 610 (for example, BSSID) of the surrounding wireless infrastructure information 600 on the basis of the again identified or acquired geofence information 500 and the surrounding infrastructure information 600 and, when there are no address lists matching each other on the basis of the comparison result, identify that the electronic device escapes from the at least one target geofence which the electronic device had entered. In this case, the electronic device 401 may identify that the geofence event "escape" is generated and may indicate the geofence event type, for example, as "type 0".

FIG. 7 is a diagram 700 illustrating a method of managing a target geofence for dynamic geofencing by an electronic device according to various embodiments. FIG. 7 illustrates a plurality of geographical areas obtained by uniformly dividing the entire marketing POI into predetermined sizes (for example, in units of 0.02 degrees of the latitude and longitude) on the basis of latitude and longitude coordinates in order to efficiently manage at least one target geofence in the memory (for example, the memory 430 of FIG. 4) of the electronic device (for example, the electronic device 401 of FIG. 4).

Referring to FIG. 7, the plurality of geographical areas may be virtual areas divided by the predetermined size, for example, latitude and longitude coordinate intervals of 0.02 degrees, in order to manage registration or storage of information on at least one marketing POI (for example, marketing POI information) received from a first server (for example, the first server 208 of FIG. 2) in the local marketing POI database (DB) (for example, the local marketing POI DB 435 of FIG. 4) of the memory 430 or manage registration or activation of the at least one marketing POI as at least one target geofence in the geofence database (DB) (for example, the geofence DB 433 of FIG. 4) by the electronic device 401 using the geofence management module (for example, the geofence management module 431 of FIG. 4).

According to an embodiment, each geographical area may include a unique identifier. For example, each geographical area may have an index value converted on the basis of central location information of each area (for example, central latitude and longitude coordinates) as the unique identifier of each area. Inversely, the index value may be converted into latitude and longitude coordinates. For example, conversion between the latitude and longitude coordinates and the index value may be performed using [Equation 1] below.

[Equation 1]

$$I(lat,\ln g)=floor(\frac{(lat+90)*100}{2})*2*100000+floor(\frac{(\ln g+180)*100}{2})*2$$

In [Equation 1], lat has a real number value from a minimum of -90 to a maximum of 90 as a latitude coordinate value, and lng has a real number value from a minimum of -180 to a maximum of 180 as a longitude coordinate value. A function floor(x) is a function of returning the largest integer which is equal to or smaller than an input value x (x being a real number). Last, I(lat, lng) indicates an index corresponding to latitude and longitude coordinates (lat, lng). For example, in the case of I(lat, lng)=I(37.2581, 126.5887), an index value calculated through [Equation 1] is "1272430658". In the index value "1272430658", the first five numbers (for example, "12724") denote an index value corresponding to a latitude coordinate value and the last five numbers (for example, "30658") denote an index value corresponding to a longitude coordinate value.

According to an embodiment, each geographical area may include at least one marketing POI, and location information (for example, latitude and longitude coordinates) of the at least one marketing POI within each geographical area may vary, but index values converted for the location information (for example, latitude and longitude coordinates) may have the same value on the basis of [Equation 1].

According to an embodiment, the electronic device 401 may register or store information on the at least one marketing POI (for example, marketing POI information) to correspond to the plurality of geographical areas in the local marketing POI DB 435 on the basis of location information of the at least one marketing POI through the geofence management module 431. In FIG. 7, each geographical area of solid lines indicates an area in which information on at least one marketing POI (for example, marketing POI information) is registered or stored in the local marketing POI DB 435 of the memory (for example, the memory 430 of FIG. 4), and each geographical area of dotted lines indicates an area in which information on at least one marketing POI (for example, marketing POI information) is not registered or stored in the local marketing POI DB 435.

According to an embodiment, the electronic device 401 may acquire location information of the electronic device 401 through the positioning device (for example, the positioning device 410 of FIG. 4) by using the geofence management module 431, and identify at least one surrounding marketing POI located around the electronic device 401 among at least one marketing POI corresponding to the plurality of geographical areas on the basis of the location information of the electronic device 401 or manage registration or activation of the at least one surrounding marketing POI as a target geofence.

For example, the electronic device 401 may identify at least one marketing POI corresponding to geographical areas (for example, first geographical areas) having a first size (Al) among at least one marketing POI corresponding to the plurality of geographical areas as at least one surrounding marketing POI located around the electronic device 401 on the basis of first location information (P1) acquired through the positioning device 410. The electronic device 401 may configure registration or activation of a surrounding marketing POI which satisfies a predetermined condition among the at least one identified surrounding marketing POI in the geofence DB 433 as the target geofence on the basis of the predetermined condition included in information on the at least one identified surrounding marketing POI. The electronic device 401 may identify whether there is a first geographical area (for example, G11) in which information on at least one marketing POI is not registered or stored among the geographical areas (for example, the first geographical areas) having the first size (Al). When there is the first geographical area (for example, G11), the electronic device 401 may make a request for information on at least one marketing POI based on the first location information (P1) (for example, latitude and longitude coordinates) or central location information (for example, central latitude and longitude coordinates) of the first geographical area (for example, G11) to the first server 208. The electronic device 401 may receive the information on at least one marketing POI from the first server 208 in response to the request and register or store the received information to correspond to the first geographical areas (Al) having the first size or the corresponding first geographical area (G11) in the local marketing POI DB 435, so as to update the marketing POI DB 435.

According to an embodiment, the electronic device 401 may identify whether the electronic device 401 moves within the plurality of geographical areas through the geofence management module 431 and, when the electronic device 401 moves, identify again at least one surrounding marketing POI located around the electronic device 401 on the basis of location information (for example, second location information (P2)) of the moved electronic device 401, make a request for information on the at least one surrounding marketing POI to the first server 208, and receive the information, so as to continuously update the local marketing POI DB 435.

For example, the electronic device 401 may acquire the second location information (P2) of the electronic device 401 through the positioning device 410 and identify whether the electronic device 401 moves within the plurality of geographical areas on the basis of the first location information (P1) and the second location information (P2). According to an embodiment, the electronic device 401 may periodically or aperiodically acquire the second location information (P2) through the positioning device 410. For example, the electronic device 401 may periodically acquire the second location information (P2) through the positioning device 410 on the basis of a predetermined time interval. For example, when movement of the electronic device 401 is detected through a sensor module (for example, the sensor module 176 of FIG. 1), the electronic device 401 may aperiodically acquire the second location information (P2) through the positioning device 410. The electronic device 401 may identify a first geographical area corresponding to the first location information (P1) among the plurality of geographical areas and identify a second geographical area corresponding to the second location information (P2) among the plurality of geographical areas.

For example, the electronic device 401 may identify whether a first index value of the first geographical area corresponding to the first location information (P1) matches a second index value of the second geographical area corresponding to the second location information (P2). When the first index value does not match the second index value, the electronic device 401 may identify that the electronic device 401 moves. When the first index value matches the second index value, the electronic device 401 may identify that the electronic device 401 does not move. For example, when movement of the electronic device 401 is identified, the electronic device 401 may identify again at least one marketing POI corresponding to geographical areas (for example, second geographical areas) having a second size (A2) among at least one marketing POI corresponding to the plurality of geographical areas as at least one surrounding marketing POI located around the electronic device 401. The electronic device 401 may identify whether there is at least one second geographical area (for example, G32 to G25) in which information on at least one marketing POI is not registered or stored among the at least one surrounding marketing POI identified again (for example, marketing POIs stored to correspond to the second geographical areas).

According to an embodiment, the first size (AI) may be the same as the second size (A2). According to an embodiment, at least some of the first geographical areas (AI) may overlap at least some of the second geographical areas (A2), and at least one second geographical area (for example, G21 to G25) in which information on at least one marketing POI is not registered or stored may be, for example, an area which does not overlap the first geographical areas (AI).

For example, when there is at least one second geographical area (for example, G21 to G25), the electronic device 401 may make a request for information on at least one marketing POI (for example, marketing POI information) based on the second location information (P2) (for example, latitude and longitude coordinates) or second central location information (for example, central latitude and longitude coordinates) of the at least one second geographical area (for example, G21 to G25) to the first server 208. The electronic device 401 may receive information on at least one marketing POI from the first server 208 in response to the request and register or store the received information to correspond to second geographical areas (A2) having the second size or at least one corresponding second geographical area (for example, G21 to G25) in the local marketing POI DB 435, so as to update the local marketing POI DB 435.

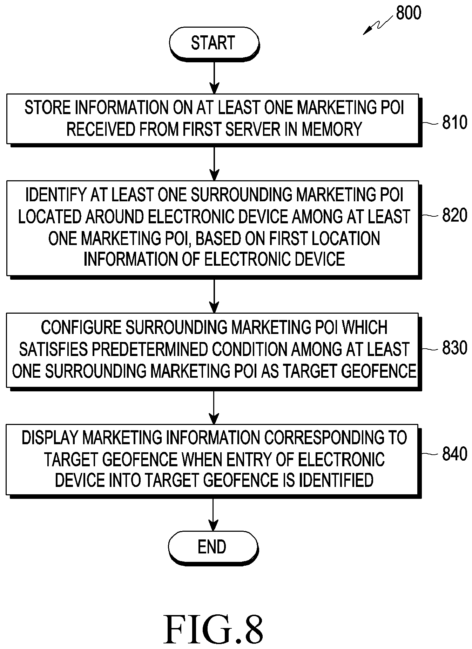

FIG. 8 is a flowchart 800 illustrating a method for dynamic geofencing by an electronic device according to various embodiments. The method may be performed by at least one of an electronic device (for example, the electronic device 401 of FIG. 4) or a processor of the electronic device 401 (for example, the processor 420 of FIG. 4) (for example, the first processor 421, the second processor 423, or the third processor 425 of FIG. 4). According to an embodiment, at least one of operations 810 to 840 may be omitted, orders of some operations may be changed, or other operations may be added.

In operation 810, the electronic device 401 may store information on at least one marketing POI (for example, marketing POI information) received from a first server (for example, the first server 208 of FIG. 2) (for example, a proximity-based marketing server) through a communication circuit (for example, the communication circuit 440 of FIG. 4) in a memory (for example, the memory 430 of FIG. 4) (for example, the local marketing POI DB 435).

According to an embodiment, the electronic device 401 (for example, the second processor 423) (for example, a sensor hub processor or a low power processor) may register or store marketing POI information of the at least one marketing POI to correspond to a plurality of geographical areas divided to have a predetermined size in the memory 430 (for example, the local marketing POI DB 435) on the basis of location information included in information on each marketing POI (for example, marketing POI information) received from the first server (for example the first server 208 of FIG. 2) (for example, the proximity-based marketing server) using a geofence management module (for example, the geofence management module 431 of FIG. 4). According to an embodiment, marketing POI information of the at least one marketing POI may be periodically or aperiodically received from the first server 208. According to an embodiment, the marketing POI information of the at least one marketing POI may be received in response to a request from the electronic device 401. The local marketing POI DB 435 may be periodically or aperiodically updated on the basis of reception of the marketing POI information of the at least one marketing POI.

According to an embodiment, the plurality of geographical areas may be obtained by uniformly dividing the entire marketing POI into the predetermined sizes (for example, latitude $\times$ longitude = 0.02 degrees $\times$ 0.02 degrees), and each geographical area may have a unique identifier (for example, an index value converted in accordance with central latitude and longitude coordinates of each geographical area).

In operation 820, the electronic device 401 may identify at least one surrounding marketing POI located around the electronic device 401 among the at least one marketing POI on the basis of the first location information of the electronic device 401.

According to an embodiment, the electronic device 401 (for example, the second processor 423) may identify at least one marketing POI corresponding to geographical areas having the first size corresponding to the first location information among the plurality of geographical areas as the at least one surrounding marketing POI located around the electronic device 401 in the local marketing POI DB 435 through the geofence management module 431.

In operation 830, the electronic device 401 may configure registration or activation of a surrounding marketing POI which satisfies a predetermined condition among the at least one surrounding marketing POI as a target geofence.

According to an embodiment, the electronic device 401 (for example, the second processor 423) may identify the predetermined condition for registering or activating the at least one surrounding marketing POI as the target geofence from the information on the surrounding marketing POI (for example, marketing POI information) through the geofence management module 431 and identify whether the surrounding marketing POI satisfies the predetermined condition. When the surrounding marketing POI satisfies the predetermined condition, the electronic device 401 (for example, the second processor 423) may configure registration or activation of the surrounding marketing POI as the target geofence in the geofence database (DB) (for example, the geofence DB 433 of FIG. 4) of the memory 430.

In operation 840, when entry of the electronic device 401 into the target geofence is identified, the electronic device 401 may display marketing information corresponding to the target geofence on a display (for example, the display 450 of FIG. 4).

According to an embodiment, the electronic device 401 (for example, the third processor 425) may identify whether the electronic device 401 enters the target geofence activated or registered in the geofence DB 433 through the geofence module 437.

According to an embodiment, when entry of the electronic device 401 into the target geofence is identified, the electronic device 401 (for example, the first processor 421) may identify marketing information included in information on the marketing POI (for example, marketing POI information) corresponding to the target geofence in the local marketing POI DB 435 of the memory 430 and display the marketing information on the display 450. For example, the marketing information may include visual data.

According to an embodiment, the electronic device 401 (for example, the first processor 421) may output the marketing information through at least one of an audio module (for example, the audio module 170 of FIG. 1) or a sound output device (for example, the sound output device 155 of FIG. 1 (for example, a speaker or a headphone)). For example, the marketing information may include at least one piece of audio data or voice data.

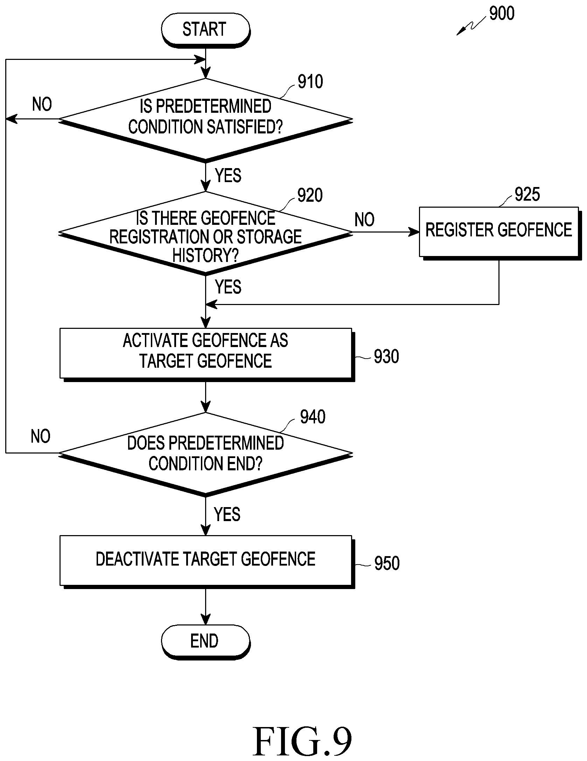

FIG. 9 is a flowchart 900 illustrating a method for dynamic geofencing by an electronic device according to various embodiments. FIG. 9 is a flowchart illustrating a method according to the embodiment of operation 830 illustrated in FIG. 8, and the method may be performed by at least one of an electronic device (for example, the electronic device 401 of FIG. 4) or a processor of the electronic device 401 (for example, the processor 420 of FIG. 4) (for example, the first processor 421, the second processor 423, or the third processor 425 of FIG. 4). According to an embodiment, at least one of operations 910 to 950 may be omitted, orders of some operations may be changed, or other operations may be added.

In operation 910, the electronic device 401 (for example, the second processor 423) may identify whether the surrounding marketing POI among the at least one surrounding marketing POI satisfies the predetermined condition on the basis of information on the at least one surrounding marketing POI (for example, the predetermined condition included in the marketing POI information) located around the electronic device 401 through the geofence management module 431. When the surrounding marketing POI satisfies the predetermined condition in operation 910, operation 920 may be performed. When the surrounding marketing POI does not satisfy the predetermined condition, operation 910 may be performed and whether the predetermined condition is satisfied may be continuously identified.

According to an embodiment, the electronic device 401 (for example, the second processor 423) may identify information on the surrounding marketing POI (for example, marketing POI information) in the local marketing POI database (DB) (for example, the local marketing POI DB 435 of FIG. 4) of the electronic device 401 and identify a predetermined condition configured for each surrounding marketing POI included in the marketing POI information.

According to an embodiment, the predetermined condition may be configured by a service provision device (for example, the service provision device 204 of FIG. 2) (for example, an electronic device of an advertiser) making a request for registering each marketing POI to the first server (for example, the first server 208 of FIG. 2) (for example, proximity-based marketing server). The predetermined condition may include, for example, at least one of a time period, a frequency or number of times, a time interval, a device type, or a duplication prevention category, designated to perform registration or activation of the target geofence for each marketing POI.

According to an embodiment, the predetermined condition may be configured by a user of the electronic device 401. For example, the predetermined condition configured by the electronic device 401 may include at least one of a time period, a frequency or number of times, a time interval, a preferred category (for example, food, a store, a brand, or a product), or the number of payment histories, designated to perform registration or activation of a target geofence for each marketing POI.

According to an embodiment, when both the predetermined condition configured by the service provision device 204 and the predetermined condition configured by the electronic device 401 are configured, the electronic device 401 (for example, the second processor 423) may configure registration or activation of the marketing POI which satisfies all of the two predetermined conditions (for example, overlapping time period) as the target geofence in the geofence database (DB) (for example, the geofence DB 433 of FIG. 4) of the memory 430. For example, when a time period (for example, PM 3 to PM 8) is configured as the predetermined condition configured by the service provision device 204 and a time period (for example, PM 5 to PM 11) is configured as the predetermined condition configured by the electronic device 401 for at least one marketing POI, the processor 420 (for example, the second processor 423) may use a time period (for example, PM 5 to PM 8) belonging to all of the two time periods as the predetermined condition for the marketing POI.

In operation 920, when the surrounding marketing POI among the at least one surrounding marketing POI satisfies the predetermined condition, the electronic device 401 (for example, the second processor 423) may identify, in the geofence DB 433, whether the surrounding marketing POI has a history of being registered or stored as the geofence in the geofence DB 433. When there is a history of the surrounding marketing POI as being registered or stored as the geofence in operation 920, operation 930 may be performed. When there is no history, operation 925 may be performed.

When there is no history of the surrounding marketing POI being registered or stored as the geofence, the electronic device 401 (for example, the second processor 423) may register or store the surrounding marketing POI to add the same as the geofence in the geofence DB 433 in operation 925.

According to an embodiment, the electronic device 401 (for example, the second processor 423) may generate or reconfigure information on the geofence (for example, the geofence information 500 of FIG. 5) to have a format or configurations required by the geofence management module 431 on the basis of the information on the surrounding marketing POI (for example, marketing POI information) so as to update the geofence DB 433 through the registration or storage of the geofence information.

According to an embodiment, the geofence information 500 may include at least some of identification information 510 of each geofence, location information 520, surrounding wireless infrastructure information 530 (for example, a BSSID of a surrounding wireless communication signal, an RSSI (for example, an average value or an intermediate value of RSSI values measured by the wireless communication signals), or an operation frequency channel), or service profile information 540. The service profile information 540 may include, for example, at least one of a geofence range of the corresponding geofence, a geofence detection latency, or a geofence event type (for example, entry or escape). A detailed description of the geofence information is replaced with the description made with reference to FIG. 5.

When the surrounding marketing POI has a history of being registered or stored as the geofence, the electronic device 401 (for example, the second processor 423) may configure (for example, "flag 1") the geofence registered or stored in the geofence DB 433 corresponding to the surrounding marketing POI to be activated as the target geofence in operation 930.

After the geofence is activated as the target geofence, the electronic device 401 (for example, the second processor 423) may identify whether the predetermined condition for the target geofence ends in operation 940. When the predetermined condition ends in operation 940, operation 950 may be performed. When the predetermined condition does not end, operation 910 may be performed and whether the predetermined condition is satisfied may be continuously identified.

According to an embodiment, the electronic device 401 (for example, the second processor 423) may identify whether, for example, the time period, the frequency or number of times, or the time interval among the predetermined conditions configured by the service provision device 204 ends. The electronic device 401 (for example, the second processor 423) may identify whether, for example, the time period, the frequency or number of times, or the number of payment histories among the predetermined conditions configured by the user of the electronic device 401 ends.

When the predetermined condition for the target geofence ends, the electronic device 401 (for example, the second processor 423) may configure deactivation of the target geofence (for example, "flag 0") in operation 950.

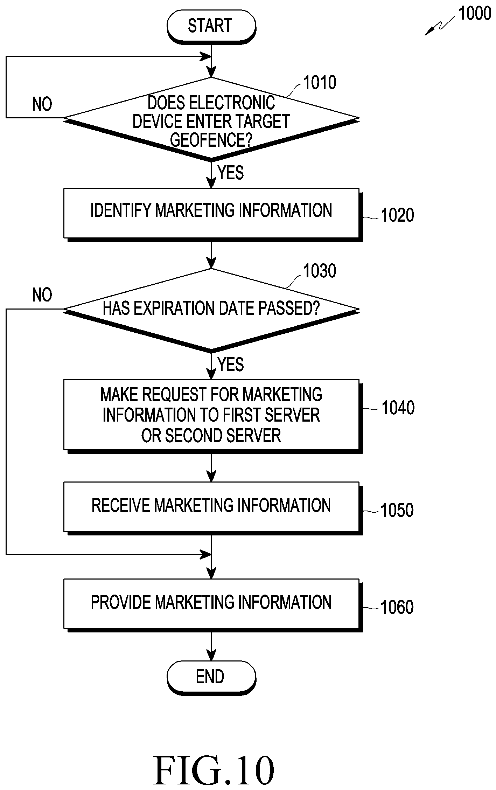

FIG. 10 is a flowchart 1000 illustrating a method for dynamic geofencing by an electronic device according to various embodiments. FIG. 10 is a flowchart illustrating a method according to the embodiment of operation 840 illustrated in FIG. 8, and the method may be performed by at least one of an electronic device (for example, the electronic device 401 of FIG. 4) or a processor of the electronic device 401 (for example, the processor 420 of FIG. 4) (for example, the first processor 421, the second processor 423, or the third processor 425 of FIG. 4). According to an embodiment, at least one of operations 1010 to 1060 may be omitted, orders of some operations may be changed, or other operations may be added.

When registration or activation of the target geofence in the geofence database (DB) (for example, the geofence DB 433 of FIG. 4) of the memory (for example, the memory 430 of FIG. 4) is configured, the electronic device 401 (for example, the third processor 425) may identify whether the electronic device 401 enters the target geofence in operation 1010. When the electronic device 401 enters the target geofence in operation 1010, operation 1020 may be performed. When the electronic device 401 does not enter the target geofence, operation 1010 may be performed and it may be continuously identified whether the electronic device 401 enters the target geofence.

According to an embodiment, when registration or activation of the target geofence is configured, the electronic device 401 (for example, the third processor 425) may identify information on the target geofence (for example, the geofence information 500 of FIG. 5) in the geofence DB 433 and acquire surrounding wireless infrastructure information (for example, the surrounding wireless infrastructure information 600 of FIG. 6) from wireless communication signals detected around the electronic device 401 through a communication circuit (for example, the communication circuit 440 of FIG. 4). According to an embodiment, the surrounding wireless infrastructure information may include at least one of address lists 610 of the surrounding wireless communication signals (for example, cell ID lists, Wi-Fi AP address lists (for example, a BSSID), or Bluetooth beacon address lists), RSSI values 620 (for example, an average value or an intermediate value of RSSI values measured by the wireless communication signals), or operation frequency channels 630. The electronic device 401 (for example, the third processor 425) may identify information on the target geofence (for example, the geofence information 500 of FIG. 5) in the geofence DB 433. The electronic device 401 (for example, the third processor 425) may identify at least one of proximity, entry, or escape of the electronic device 401 with respect to the target geofence on the basis of the acquired geofence information 500 and the acquired surrounding wireless infrastructure information 600.

For example, the electronic device 401 (for example, the third processor 425) may compare the identified geofence information 500 and the acquired surrounding wireless infrastructure information 600, identify whether at least one of the address lists, the RSSI values (for example, the average value or the intermediate value of the RSSI values measured by the wireless communication signals), or the operation frequency channels matches, and identify whether a geofence event (for example, entry or escape) of the electronic device 401 for the target geofence is generated on the basis of the number of matched address lists, RSSI values (for example, the average value or the intermediate value of the RSSI values measured by the wireless communication signals), or operation frequency channels. For example, when surrounding address lists larger than or equal to a predetermined number of address lists among the surrounding address lists included in the identified geofence information 500 match the surrounding address lists included in the acquired surrounding wireless infrastructure information 600, the electronic device 401 (for example, the third processor 425) may identify that the electronic device 401 enters the target geofence. In this case, the electronic device 401 (for example, the third processor 425) may identify that the geofence event (for example, "entry") is generated and may indicate a geofence event type, for example, as "type 1". When surrounding address lists smaller than a predetermined number of address lists among the surrounding address lists included in the identified geofence information 500 match the surrounding address lists included in the acquired surrounding wireless infrastructure information 600, the electronic device 401 (for example, the third processor 425) may identify that the electronic device 401 approaches the target geofence. When there is no matched address list between the surrounding address lists included in the identified geofence information 500 and the surrounding address lists included in the acquired surrounding wireless infrastructure information 600, the electronic device 401 (for example, the third processor 425) may identify that the electronic device 401 does not approach the target geofence in which case the geofence event is not generated. After the entry into the target geofence is identified, the electronic device 401 (for example, the third processor 425) may identify again or acquire the geofence information 500 of the target geofence or the surrounding wireless infrastructure information 600 on the basis of a predetermined condition of the target geofence (for example, a frequency or number of times, or a time interval). The electronic device 401 (for example, the third processor 425) may compare the address lists of the geofence information 500 and address lists of the surrounding wireless infrastructure information 600, identified again or acquired, on the basis of the again identified or acquired geofence information 500 and the surrounding wireless infrastructure information 600 and, when there is no matched address list on the basis of the comparison result, identify that the electronic device escapes from the target geofence into which the electronic device had entered. In this case, the electronic device 401 (for example, the third processor 425) may identify that a geofence event (for example, "escape") is generated and indicate a geofence event type, as "type 0".

According to an embodiment, the electronic device 401 (for example, the third processor 425) may identify whether the electronic device 401 approaches, enters, or escapes from the target geofence on the basis of location information 520 (for example, central latitude and longitude coordinates of the target geofence) of the identified geofence information 500 and location information (for example, latitude and longitude coordinates) of the electronic device 401 acquired through the positioning device (for example, the positioning device 410 of FIG. 4).

When it is identified that the electronic device 401 enters the at least one target geofence, the electronic device 401 (for example, the first processor 421) may identify marketing information included in information on a marketing POI (for example, marketing POI information) corresponding to the target geofence in the local marketing POI database (DB) (for example, the local marketing POI DB 435 of FIG. 4) of the memory 430 in operation 1020.

According to an embodiment, the marketing information may include at least one marketing content item for the marketing POI corresponding to the target geofence (for example, at least some of coupon information, event information, advertisement information, a list of products for sale, or URL information) or an expiration date of the at least one content item.

The electronic device 401 (for example, the first processor 421) may identify whether an expiration date of the at least one content item included in the marketing information has passed in operation 1030. When it is identified that the expiration date has passed in operation 1030, operation 1040 may be performed. When the expiration date has not passed, operation 1060 may be performed.

When it is identified that the expiration date for the at least one content item has passed, the electronic device 401 (for example, the first processor 421) may make a request for marketing information corresponding to the target geofence of which the expiration date has passed to the first server (for example, the first server 208 of FIG. 2) (for example, a proximity-based marketing server) or the second server (for example, the second server 206 of FIG. 2) (for example, a marketing content server) through the communication circuit (for example, the communication circuit 440 of FIG. 4) in operation 1040. For example, the electronic device 401 (for example, the first processor 421) may make a request for the marketing information of which the expiration date has passed, including location information of the electronic device 401 or location information (for example, latitude and longitude coordinates) of the target geofence to the first server 208 or the second server 206.

The electronic device 401 (for example, the first processor 421) may receive the marketing information from the first server 208 or the second server 206 in response to the request in operation 1050. For example, the electronic device 401 (for example, the first processor 421) may receive marketing information corresponding to location information of the electronic device 401 or location information of the target geofence from the first server 208 or the second server 206 through the communication circuit 440. The electronic device 401 (for example, the first processor 421) may reflect the received marketing information to update information on the surrounding marketing POI (for example, marketing POI information) stored in the local marketing POI DB 435 in accordance with the target geofence.

When the expiration date is not included in the marketing information, at least one of operations 1030 to 1050 may be omitted.

In operation 1060, the electronic device 401 (for example, the first processor 421) may provide the marketing information.

According to an embodiment, the electronic device 401 (for example, the first processor 421) may display the marketing information on a display (for example, the display 450 of FIG. 4). For example, the electronic device 401 (for example, the first processor 421) may display the received marketing information or marketing information corresponding to the target geofence stored in the local marketing POI DB 435 on the display 450. For example, the marketing information may include visual data.

According to an embodiment, the processor 420 (for example, the first processor 421) may output the marketing information through at least one of an audio module (for example, the audio module 170 of FIG. 1) or a sound output device (for example, the sound output device 155 of FIG. 1 (for example, a speaker or a headphone)). For example, the marketing information may include at least one piece of audio data or voice data.

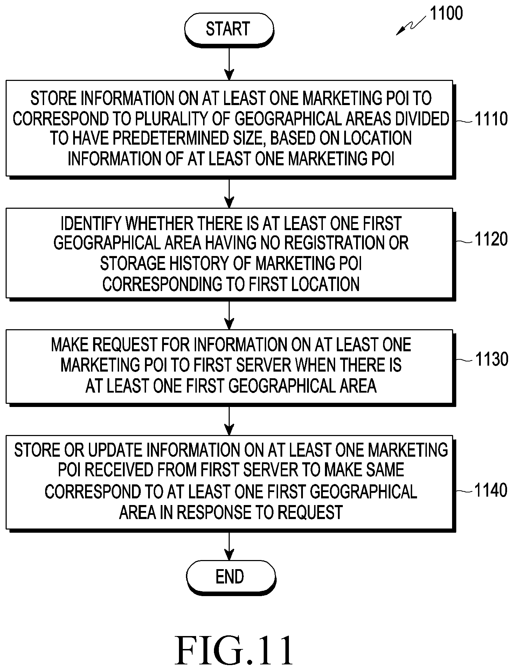

FIG. 11 is a flowchart 1100 illustrating a method for dynamic geofencing by an electronic device according to various embodiments. The method may be performed by at least one of an electronic device (for example, the electronic device 401 of FIG. 4) or a processor of the electronic device 401 (for example, the processor 420 of FIG. 4) (for example, the first processor 421, the second processor 423, or the third processor 425 of FIG. 4). According to an embodiment, at least one of operations 1110 to 1140 may be omitted, orders of some operations may be changed, or other operations may be added.

The electronic device 401 (for example, the second processor 423) may register or store information on at least one marketing POI (marketing POI information) in a local marketing POI database (DB) (for example, the marketing POI DB 435 of FIG. 4) of a memory (for example, the memory 430 of FIG. 4) to correspond to a plurality of geographical areas divided to have a predetermined size on the basis of location information of the at least one marketing POI received from a first server (for example, the first server 208 of FIG. 2) (for example, a proximity-based marketing server) through a geofence management module (for example, the geofence management module 431 of FIG. 4) in operation 1110.

For example, the electronic device 401 (for example, the second processor 423) may register or store information on each marketing POI (for example, marketing POI information) in the local marketing POI DB 435 of the memory 430 to correspond to geographical areas corresponding to the location information (for example, latitude and longitude coordinates) among the plurality of geographical areas on the basis of location information (for example, latitude and longitude coordinates) included in marketing POI information of the marketing POIs received from the first server 208. The plurality of geographical areas may be obtained by uniformly dividing the entire marketing POI into predetermined sizes (for example, altitude x longitude coordinate = 0.02 degrees x 0..02 degrees), and each geographical area may have a unique identifier

(for example, a unique index value converted on the basis of location information of the center of each geographical area (for example, central altitude and longitude coordinates)).

According to an embodiment, each geographical area may include at least one marketing POI, and location information (for example, latitude and longitude coordinates) of the at least one marketing POI within each geographical area may vary, but index values converted for the location information (for example, latitude and longitude coordinates) may have the same value on the basis of [Equation 1].

In operation 1120, the electronic device 401 (for example, the second processor 423) may identify whether there is at least one first geographical area (for example, the first geographical area (G11) of FIG. 7) having no history of registration or storage of information on the marketing POI within first geographical areas (for example, the first geographical areas (AI) of FIG. 7) having a first size corresponding to first location information (for example, the first location information (P1) of FIG. 7) of the electronic device 401 among the plurality of geographical areas through the geofence management module 431.

For example, the electronic device 401 (for example, the second processor 423) may acquire an index value corresponding to the current location information (for example, latitude and longitude coordinates) measured through the positioning device (for example, the positioning device 410 of FIG. 4) of the electronic device 401 using [Equation 1] described in FIG. 7 and identify a geographical area (for example, the geographical area corresponding to P1 of FIG. 7) corresponding to the acquired index value. The electronic device 401 (for example, the second processor 423) may identify geographical areas (for example, geographical areas within the area A1 surrounding the geographical area corresponding to P1 of FIG. 7) around the identified geographical area (for example, the geographical area corresponding to P1 of FIG. 7) and identify whether there is at least one geographical area (for example, the geographical area (G11) of FIG. 7) having no history of registration or storage of information on at least one marketing POI among the identified geographical areas (for example, geographical areas within the area A1 surrounding the geographical area corresponding to P1 of FIG. 7).

When there is at least one first geographical area (for example, G11) having no history of registration or storage of the marketing POI information, the electronic device 401 (for example, the second processor 423) may make a request for information on at least one marketing POI (for example, marketing POI information) corresponding to the first location information (P1) or first central location information of the at least one first geographical area (for example, G11) to the first server 208 through the geofence management module 431 in operation 1130. For example, the electronic device 401 (for example, the second processor 423) may transmit the request including the first location information (P1) or the first central location information of the at least one first geographical area (for example, G11) to the first server 208 through a communication circuit (for example, the communication circuit 440 of FIG. 4).

In operation 1140, the electronic device 401 (for example, the second processor 423) may register or store information on at least one marketing POI (for example, marketing POI information) corresponding to the first location information (P1) or the first central location information of the at least one first geographical area (G11), received from the first server 208 through the geofence management module 431 in response to the request, in the local marketing POI DB 435.

For example, the electronic device 401 (for example, the second processor 423) may receive marketing POI information corresponding to the first location information (P1) or the first central location information of the at least one first geographical area (G11) from the first server 208 through the communication circuit 440 and register or store the received marketing POI information in the local marketing POI DB 435 to correspond to the at least one first geographical area (for example, G11) corresponding to the first location information (P1) or the first central location information, so as to update the local POI DB 435.

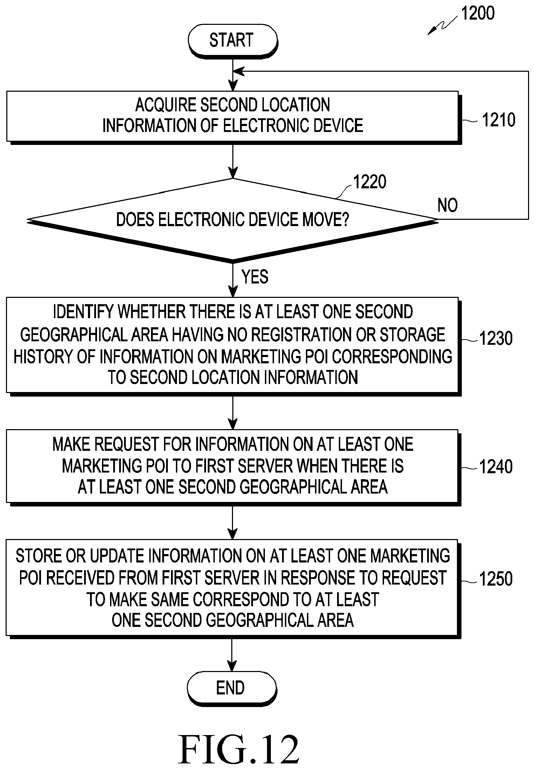

FIG. 12 is a flowchart 1200 illustrating a method for dynamic geofencing by an electronic device according to various embodiments. The method may be performed by at least one of an electronic device (for example, the electronic device 401 of FIG. 4) or a processor of the electronic device 401 (for example, the processor 420 of FIG. 4) (for example, the first processor 421, the second processor 423, or the third processor 425 of FIG. 4). According to an embodiment, at least one of operations 1210 to 1250 may be omitted, orders of some operations may be changed, or other operations may be added.

In operation 1210, the electronic device 401 (for example, the second processor 423) may acquire second location information (for example, the second location information (P2) of FIG. 7) of the electronic device 401 after registering or storing information on at least one marketing POI (for example, marketing POI information) received from a first server (for example, the first server 208 of FIG. 2) in a local marketing POI database (DB) (for example, the marketing POI DB 435 of FIG. 4) of a memory (for example, the memory 430 of FIG. 4) on the basis of first location information (for example, the first location information (P1) of FIG. 7) of the electronic device 401 through a geofence management module (for example, the geofence management module 431 of FIG. 4). For example, the electronic device 401 (for example, the second processor 423) may acquire the second location information (P2) through a positioning device (for example, the positioning device 410 of FIG. 4).

According to an embodiment, the electronic device 401 (for example, the second processor 423) may periodically or aperiodically acquire the second location information (P2) through the positioning device 410. For example, the electronic device 401 (for example, the second processor 423) may periodically acquire the second location information (P2) through the positioning device 410 on the basis of a predetermined time interval. For example, when movement of the electronic device 401 is detected through a sensor module (for example, the sensor module 176 of FIG. 1), the electronic device 401 (for example, the second processor 423) may aperiodically acquire the second location information (P2) through the positioning device 410.

In operation 1220, the electronic device 401 (for example, the second processor 423) may identify whether the electronic device 401 moves within the plurality of geographical areas on the basis of the first location information (P1) and the second location information (P2) through the geofence management module 431.

For example, the electronic device 401 (for example, the second processor 423) may identify a first geographical area corresponding to the first location information (P1) among the plurality of geographical areas and identify a second geographical area corresponding to the second location information (P2) among the plurality of geographical areas. The electronic device 401 (for example, the second processor 423) may identify whether a first index value of the first geographical area corresponding to the first location information (P1) matches a second index value of the second geographical area corresponding to the second location information (P2). When the first index value does not match the second index value, the electronic device 401 (for example, the second processor 423) may identify that the electronic device 401 moves within the plurality of geographical areas. When first index value matches the second index value, the electronic device 401 (for example, the second processor 423) may identify that the electronic device 401 does not move within the plurality of geographical areas. Operation 1230 may be performed when it is determined that the electronic device 401 moves in operation 1220, and operation 1210 may be performed when it is identified that the electronic device 401 does not move.

When movement of the electronic device 401 is identified through the geofence management module 431, the electronic device 401 (for example, the second processor 423) may identify whether there is at least one second geographical area (for example, the second geographical areas (G21 to G25) of FIG. 7) having no registration history of information on a marketing POI (for example, marketing POI information) within second geographical areas (for example, the second geographical areas (A2) of FIG. 7) having a second size corresponding to the second location information (P2) among the plurality of geographical areas in operation 1230.

For example, the electronic device 401 (for example, the second processor 423) may acquire an index value corresponding to the current location information (for example, latitude and longitude coordinates) measured through the positioning device (for example, the positioning device 410 of FIG. 4) of the electronic device 401 on the basis of [Equation 1] described in FIG. 7 and identify a geographical area (for example, the geographical area corresponding to P2 of FIG. 7) corresponding to the acquired index value. The electronic device 401 (for example, the second processor 423) may identify geographical areas (for example, geographical areas within the area A2 surrounding the geographical area corresponding to P2 of FIG. 7) around the identified geographical area (for example, the geographical area corresponding to P2 of FIG. 7) and identify whether there is at least one geographical area (for example, the geographical areas (G21 to G25) of FIG. 7) having no registration or storage history of information on at least one marketing POI among the identified geographical areas (for example, geographical areas within the area A2 surrounding the geographical area corresponding to P2 of FIG. 7).

When there is at least one second geographical area (for example, G21 to G25) having no registration or storage history of the marketing POI information, the electronic device 401 (for example, the second processor 423) may make a request for information on at least one marketing POI (for example, marketing POI information) corresponding to the second location information (P2) or second central location information of the at least one second geographical area (for example, G21 to G25) to the first server 208 through the geofence management module 431 in operation 1240. For example, the electronic device 401 (for example, the second processor 423) may transmit the request including the second location information (P1) or the second central location information of the at least one second geographical area (for example, G21 to G25) through the communication circuit (for example, the communication circuit 440 of FIG. 4) to the first server 208.

In operation 1250, the electronic device 401 (for example, the second processor 423) may register or store, in the local marketing POI DB 435, information on at least one marketing POI (for example, marketing POI information) corresponding to the second location information (P2) or the second central location information of the at least one second geographical area (G21 to G25) received from the first server 208 in response to the request through the geofence management module 431.

For example, the electronic device 401 (for example, the second processor 423) may register or store, in the local marketing POI DB 435, information on at least one marketing POI (for example, marketing POI information) corresponding to the second location information (P2) or the second central location information of the at least one second geographical area (G21 to G25) received from the first server 208 through the communication circuit 440. For example, the electronic device 401 (for example, the second processor 423) may receive marketing POI information corresponding to the second location information (P2) or the second central location information of the at least one second geographical area (G21 to G25) received from the first server 208 through the communication circuit 440 and register or store the received marketing POI information in the local marketing POI DB 435 to correspond to the at least one second geographical area (for example, G21 to G25) corresponding to the second location information (P2) or the second central location information, so as to update the local marketing POI DB 435.

According to an embodiment, the first size (A1) may be the same as the second size (A2). According to an embodiment, at least some of the first geographical areas (AI) may overlap at least some of the second geographical areas (A2). For example, the at least one second geographical area (for example, G21 to G25) in which information on at least one marketing POI is not registered or stored may be an area which does not overlap the first geographical areas (AI). The electronic device 401 (for example, the second processor 423) may make a request for information on the marketing POI (for example, marketing POI information) to the first server 208 and receive the same only for the areas (for example, the second geographical areas (for example, G21 to G25)) in which information on at least one marketing POI is not registered or stored among the areas which do not overlap, so as to continuously update the local marketing POI DB 435.

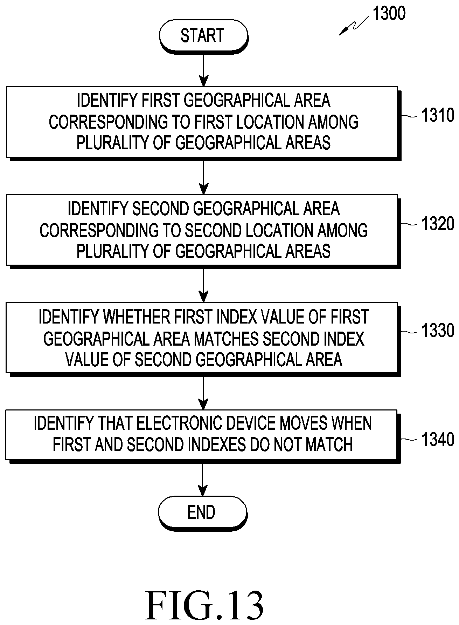

FIG. 13 is a flowchart 1300 illustrating a method for dynamic geofencing by an electronic device according to various embodiments. FIG. 13 is a flowchart illustrating a method according to the embodiment of operation 1220 illustrated in FIG. 12, and the method may be performed by at least one of an electronic device (for example, the electronic device 401 of FIG. 4) or a processor of the electronic device 401 (for example, the processor 420 of FIG. 4) (for example, the first processor 421, the second processor 423, or the third processor 425 of FIG. 4). According to an embodiment, at least one of operations 1310 to 1340 may be omitted, orders of some operations may be changed, or other operations may be added.

In operation 1310, the electronic device 401 (for example, the second processor 423) may identify a first geographical area corresponding to first location information (for example, the first location information (PI) of FIG. 7) of the electronic device 401 among a plurality of geographical areas in a local marketing POI database (DB) (for example, the marketing POI DB 435 of FIG. 4) of a memory (for example, the memory 430 of FIG. 4) which stores information on a plurality of marketing POIs (for example, marketing POI information) received from a first server (for example, the first server 208 of FIG. 2) (for example, a proximity-based marketing server) through a geofence management module (for example, the geofence management module 431 of FIG. 4) such that the marketing POI information corresponds to the plurality of geographical areas divided to have a predetermined size.

For example, the first location information (PI) may include first latitude and longitude coordinates of the electronic device 401 acquired through a positioning device (for example, the positioning device 410 of FIG. 4). The electronic device 401 (for example, the second processor 423) may acquire a first index value corresponding to the first latitude and longitude coordinates on the basis of [Equation 1] described in FIG. 7 and identify a geographical area corresponding to the first index value among the plurality of geographical areas as a first geographical area corresponding to the first latitude and longitude coordinates.

In operation 1320, the electronic device 401 (for example, the second processor 423) may identify a second geographical area corresponding to second location information (for example, the second location information (P2) of FIG. 7) of the electronic device 401 among the plurality of geographical areas through the geofence management module 431.

For example, the second location information (P2) may include second latitude and longitude coordinates of the electronic device 401 acquired through the positioning device 410. The electronic device 401 (for example, the second processor 423) may acquire a second index value corresponding to the second latitude and longitude coordinates on the basis of [Equation 1] described in FIG. 7 and identify a geographical area corresponding to the second index value among the plurality of geographical areas as a second geographical area corresponding to the second latitude and longitude coordinates.

In operation 1330, the electronic device 401 (for example, the second processor 423) may identify whether the first index value of the first geographical area corresponding to the first location information (PI) matches the second index value of the second geographical area corresponding to the second location information (P2) through the geofence management module 431. For example, the electronic device 401 (for example, the second processor 423) may compare the first index value and the second index value and identify whether the values match each other.

According to an embodiment, each geographical area may have a unique index value. For example, a plurality of index values corresponding to the plurality of geographical areas may be different.

According to an embodiment, each geographical area may include at least one marketing POI, and location information (for example, latitude and longitude coordinates) of the at least one marketing POI within each geographical area may be different from each other, and index values converted for the location information (for example, latitude and longitude coordinates) using [Equation 1] above may have the same value.

When the first index value does not match the second index value, the electronic device 401 (for example, the second processor 423) may identify that the electronic device 401 moves through the geofence management module 431 in operation 1340.

Since each geographical area has a unique index value, if the first index value does not match the second index value, the electronic device 401 (for example, the second processor 423) may identify that the electronic device 401 moves within the plurality of geographical areas. When the first index value matches the second index value, the electronic device 401 (for example, the second processor 423) may identify that the electronic device 401 does not move within the plurality of geographical areas.

According to various embodiments, a method for performing dynamic geofencing by the electronic device 401 may include an operation of storing information on at least one marketing Point of Interest (POI) received from a first server through the communication circuit 440 in at least one memory 430 of the electronic device, an operation of identifying at least one surrounding POI located around the electronic device 401 among the at least one marketing POI on the basis of first location information of the electronic device 401, an operation of configuring a surrounding marketing POI, which satisfies a predetermined condition, among the at least one surrounding marketing POI as a target geofence, and an operation of, when entry of the electronic device 401 into the at least one geofence is identified, displaying marketing information corresponding to the at least one target geofence on the display 450.

According to various embodiments, the operation of configuring the surrounding marketing POI as the target geofence may include an operation of identifying whether the surrounding marketing POI satisfies the predetermined condition among the at least one surrounding marketing POI, an operation of identifying whether the surrounding marketing POI has a history of being registered or stored as a geofence in the at least one memory 430 when the marketing POI satisfies the predetermined condition, an operation of configuring activation of the surrounding marketing POI as the target geofence when the surrounding marketing POI has the history of being registered or stored as the geofence, and an operation of configuring registration and activation of the surrounding marketing POI in the at least one memory 430 as the target geofence when the surrounding marketing POI has no history of being registered or stored as the geofence.

According to various embodiments, the method of performing dynamic geofencing by the electronic device 401 may further include an operation of making a request for marketing information corresponding to the target geofence of which an expiration date has passed to the first server or a second server through the communication circuit on the basis of passing of the expiration date included in the marketing information and an operation of receiving the marketing information corresponding to the target geofence of which the expiration date has passed from the first server or the second server through the communication circuit in response to the request.

According to various embodiments, the operation of storing the information on the at least one marketing POI in the at least one memory may include an operation of storing the information on the at least one marketing POI in the at least one memory 430 to correspond to a plurality of geographical areas divided to have a predetermined size on the basis of location information of the at least one marketing POI.

According to various embodiments, the method of performing dynamic geofencing by the electronic device 401 may further include an operation of identifying whether there is at least one first geographical area having no registration history of information on a marketing POI within first geographical areas having a first size corresponding to the first location information among the plurality of geographical areas, an operation of making a request for information on at least one marketing POI corresponding to the first location information or first central location information of the at least one first geographical area to the first server 208 through the communication circuit 440 when there is at least one first geographical area, and an operation of updating, in response to the request, the at least one memory 430 by registering or storing information on at least one marketing POI corresponding to the first location information or the first central location information of the at least one first geographical area received from the first server 208 through the communication circuit 440 to make the information on the at least one marketing POI correspond to the at least one first geographical area.

According to various embodiments, a computer-readable recording medium for recording a program to be executed in a computer is provided. The program may include executable instructions causing a processor (for example, the processor 420 of FIG. 4) to, when executed by the processor 420, store information on at least one marketing Point of Interest (POI) received from a first server (for example, the first server 208 of FIG. 2) through a communication circuit (for example, the communication circuit 440 of FIG. 4) in at least one memory (for example, the memory 430 of FIG. 4) of an electronic device (for example, the electronic device 401 of FIG. 4), identify at least one surrounding POI located around the electronic device among the at least one marketing POI on the basis of first location information of the electronic device, configure a surrounding marketing POI, which satisfies a predetermined condition, among the at least one surrounding marketing POI as a target geofence, and display marketing information corresponding to the target geofence on a display (for example, the display 450 of FIG. 4) of the electronic device 401 when entry of the electronic device 401 into the target geofence is identified.

According to various embodiments, the program may include executable instructions causing the processor 420 to, when executed by the processor 420, identify whether the surrounding marketing POI satisfies the predetermined condition among the at least one surrounding marketing POI, identify whether the surrounding marketing POI has a history of being registered or stored as a geofence in the at least one memory 430 when the marketing POI satisfies the predetermined condition, configure activation of the surrounding marketing POI as the target geofence when the surrounding marketing POI has the history of being registered or stored as the geofence, and configure registration of the surrounding marketing POI as the geofence and activation of the surrounding marketing POI as the target geofence in the at least one memory 430 when the surrounding marketing POI has no history of being registered or stored as the geofence.

According to various embodiments, the program may include executable instructions causing the processor 420 to, when executed by the processor 420, identify whether an expiration date included in the marketing information has passed, make a request for marketing information corresponding to the target geofence of which the expiration date has passed to the first server 208 or a second server (for example, the second server 206 of FIG. 2) through the communication circuit 440 when it is identified that the expiration date has passed, and receive the marketing information corresponding to the target geofence of which the expiration date has passed from the first server 208 or the second server 206 through the communication circuit 440 in response to the request.

According to various embodiments, the program may include executable instructions causing the processor 420 to, when executed by the processor 420, store information on the at least one marketing POI in the at least one memory 430 to correspond to a plurality of geographical areas divided to have a predetermined size on the basis of location information of the at least one marketing POI.

According to various embodiments, the program may include executable instructions causing the processor 420 to, when executed by the processor 420, identify whether there is at least one first geographical area having no registration history of information on a marketing POI within first geographical areas having a first size corresponding to the first location information among the plurality of geographical areas, make a request for information on at least one marketing POI corresponding to the first location information or first central location information of the at least one first geographical area to the first server through the communication circuit 440 when there is at least one first geographical area, and, in response to the request, update the at least one memory 430 by registering or storing information on at least one marketing POI corresponding to the first location information or the first central location information of the at least one first geographical area received from the first server 208 through the communication circuit 440 to make the information on the at least one marketing POI correspond to the at least one first geographical area.

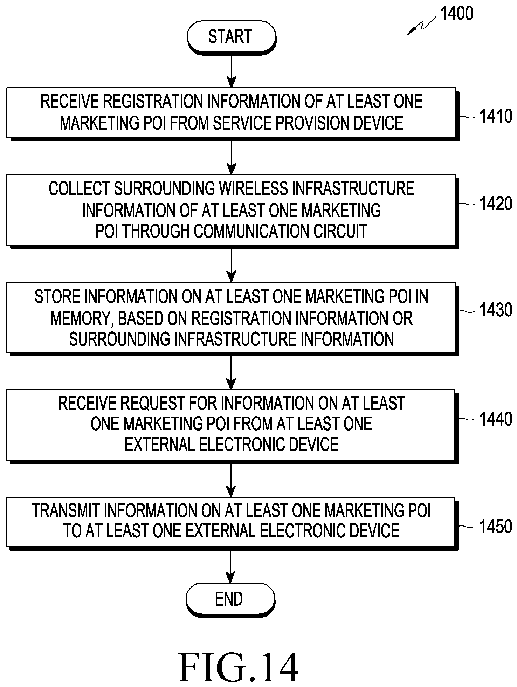

FIG. 14 is a flowchart 1400 illustrating a method for dynamic geofencing by a first server according to various embodiments. The method may be performed by at least one of a first server (for example, the first server 208 of FIG. 2) (for example, a proximity-based marketing server) or a processor of the first server 208 (for example, the processor 220 of FIG. 2). According to an embodiment, at least one of operations 1410 to 1450 may be omitted, orders of some operations may be changed, or other operations may be added.

In operation 1410, the first server 208 may receive information (for example, the marketing POI registration information 300 of FIG. 3) making a request for registering at least one marketing POI (for example, marketing POI) from a service provision device (for example, the service provision device 204 of FIG. 2) (for example, an electronic device of an advertiser) through a communication circuit (for example, the communication circuit 210 of FIG. 2). For example, the first server 208 may provide a web portal or at least one application through which the marketing POI registration information can be registered to the user provision device 204.

According to an embodiment, the marketing POI registration information 300 may include at least one piece of identification information of each marketing POI (for example, the marketing POI ID 310), the geofence configuration information 320, the predetermined condition 330, or the marketing information 340. A detailed description of the marketing POI registration information 300 is replaced with the description of the marketing POI registration information 300 of FIG. 3.

In operation 1420, the first server 208 may collect surrounding wireless infrastructure information around the at least one marketing POI through the communication circuit 210 on the basis of location information on the at least one marketing POI.

According to an embodiment, the first server 208 may identify location information on the at least one marketing POI included in the marketing POI registration information 300 received from the service provision device 204. The first server 208 may identify wireless infrastructure information stored in a marketing POI database (DB) (for example, the marketing POI DB 235 of FIG. 2) of a memory (for example, the memory 230 of FIG. 2) on the basis of the location information. For example, the surrounding wireless infrastructure information may be information obtained by collecting surrounding wireless infrastructure information detected around the at least one marketing POI through various methods and transmitted to the first server 208 by the service provision device 204. According to an embodiment, when the service provision device 204 identifies an offline payment, the service provision device 204 may collect cell towers, Wi-Fi AP information, and Bluetooth beacon information, detected around the service provision device 204 through a wireless communication circuit (for example, the wireless communication module 192 of FIG. 1) of the service provision device 204 and transmit the collected information along with the payment information to the first server 208 at the payment time point. According to an embodiment, the advertiser or the user may enter the marketing POI, collect surrounding wireless infrastructure information, and directly transfer the same to the first server 208 using at least one application (for example, a POI information collection application) installed in the service provision device 204.

According to an embodiment, the first server 208 may collect the wireless infrastructure information in the form of crowd sourcing through an unspecified number of electronic devices (for example, the electronic device 401 of FIG. 4). The first server 208 may periodically or aperiodically collect the wireless infrastructure information.

In operation 1430, the first server 208 may register or store information on the at least one marketing POI (for example, marketing POI information) in the marketing POI DB 235 of the memory 230 on the basis of the marketing POI registration information 300 or the wireless infrastructure information.

According to an embodiment, the marketing POI information may include the marketing POI registration information 300. According to an embodiment, the first server 208 may generate or reconfigure the marketing POI information to have a format or configurations required by a marketing POI management module (for example, the marketing POI management module 231 of FIG. 2) on the basis of the marketing POI registration information 300 or the wireless infrastructure information and register or store the generated or reconfigured marketing POI information in the marketing POI DB 235. According to an embodiment, the first server 208 may periodically or aperiodically update the marketing POI DB 235 through the marketing POI management module 231 to continuously manage the same.

According to an embodiment, the first server 208 may register or store marketing information of the at least one marketing POI in a marketing content database (DB) (for example, the marketing content DB 237 of FIG. 2) of the memory 230 on the basis of the marketing POI registration information 300 through a marketing content management module (for example, the marketing content management module 233 of FIG. 2). According to an embodiment, the first server 208 may periodically or aperiodically update the marketing content DB 237 through the marketing content management module 233 so as to continuously manage the same.

In operation 1440, the first server 208 may receive a message making a request for information on at least one marketing POI (for example, marketing POI information) from at least one electronic device 401 through the communication circuit 210. According to an embodiment, the request message may include location information (for example, latitude and longitude coordinates) of the at least one electronic device 401.

In operation 1450, the first server 208 may transmit information on the at least one marketing POI (for example, marketing POI information) to the at least one electronic device 401 through the communication circuit 210 in response to the request.

For example, the first server 208 may identify at least one marketing POI corresponding to the location information (for example, latitude and longitude coordinates) in the marketing POI DB 235 or the marketing content DB 237 on the basis of the location information (for example, latitude and longitude coordinates) of the at least one electronic device 401 included in the request message and identify information on the at least one marketing POI (for example, marketing POI information). The first server 208 may transmit information on the at least one marketing POI (for example, marketing POI information) to the at least one electronic device 401.

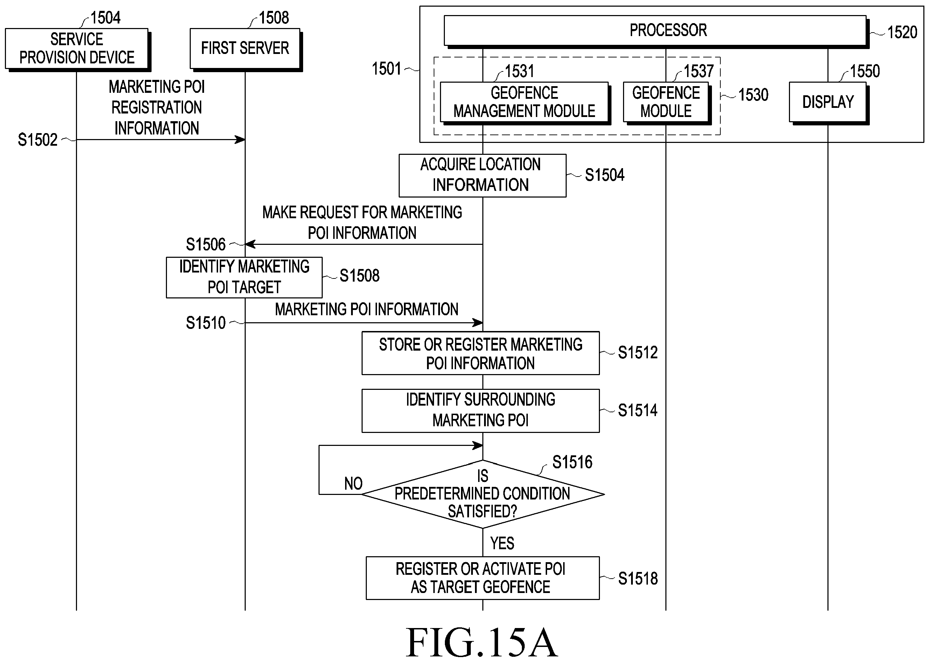

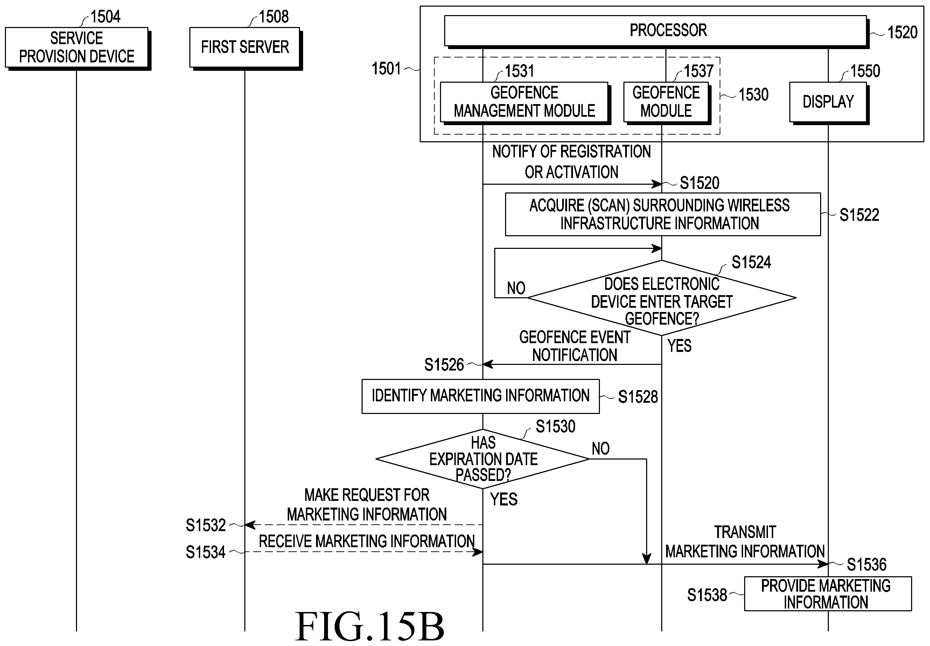

FIGs. 15A and 15B are flowcharts illustrating a method for dynamic geofencing in a dynamic geofencing system according to various embodiments. The method may be performed by at least one of a service provision device 1504 (for example, the service provision device 204 of FIG. 2), a first server 1508 (for example, the first server 208 of FIG. 2) (for example, a proximity-based marketing server) or a processor of the first server 1508 (for example, the processor 220 of FIG. 2), and an electronic device 1501 (for example, the electronic device 401 of FIG. 4) or a processor 1520 of the electronic device 1501 (for example, the processor 420 of FIG. 4). According to an embodiment, at least one of operations S1502 to S1538 may be omitted, orders of some operations may be changed, or other operations may be added.

Referring to FIG. 15A, in operation S1502, the service provision device 1504 (for example, an electronic device of an advertiser) may transmit information (for example, the marketing POI registration information 300 of FIG. 3) making a request for registering at least one marketing POI to the first server 1508 through a network (for example, the network 299 of FIG. 2). For example, the service provision device 1504 may make a request for registering the marketing POI registration information 300 through a web portal or at least one application provided by the first server 208.

In operation S1504, a processor 1520 of the electronic device 1501 (for example, the second processor 423 of FIG. 4) may acquire location information (for example, latitude and longitude coordinates) of the electronic device 1501 through a positioning device (for example, the positioning device 410 of FIG. 4) using a geofence management module 1531 (for example, the geofence management module 431 of FIG. 4).

In operation S1506, the processor 1520 of the electronic device 1501 (for example, the second processor 423 of FIG. 4) may transmit a message making a request for information on at least one marketing POI (for example, marketing POI information) to the first server 1508 on the basis of location information (for example, latitude and longitude coordinates) of the electronic device 1501 through the geofence management module 1531. The message may include the location information (for example, latitude and longitude coordinates) of the electronic device 1501.

In operation S1508, the first server 1508 may identify a target of the at least one marketing POI on the basis of the location information (for example, latitude and longitude coordinates) of the electronic device 1501 in response to the request.

In operation S1510, the first server 1508 may identify the information on the at least one marketing POI (for example, marketing POI information) in a marketing POI database (DB) (for example, the marketing POI DB 235 of FIG. 2) or a marketing content database (DB) (for example, the marketing content DB 237 of FIG. 2) and transfer the identified marketing POI information to the electronic device 1501.

In operation S1512, the processor 1520 of the electronic device 1501 (for example, the second processor 423 of FIG. 4) may store or register the information on at least one marketing POI (for example, marketing POI information) received from the first server 1508 through the geofence management module 1531 in a local marketing POI database (DB) (for example, the local marketing POI DB 435 of FIG. 4).

In operation S1514, the processor 1520 of the electronic device 1501 (for example, the second processor 423 of FIG. 4) may identify surrounding marketing POIs located around the electronic device 1501 through the geofence management module 1531.

In operation S1516, the processor 1520 of the electronic device 1501 (for example, the second processor 423 of FIG. 4) may identify whether at least one surrounding marketing POI satisfies a predetermined condition included in the marketing POI information through the geofence management module 1531.

When at least one surrounding marketing POI among the surrounding POIs satisfies the predetermined condition included in the marketing POI information, the processor 1520 of the electronic device 1501 (for example, the second processor 423 of FIG. 4) may be configured to register (or store) or activate the at least one surrounding marketing POI in a geofence database (DB) (for example, the geofence DB 433 of FIG. 4) as at least one target geofence through the geofence management module 1531 in operation S1518.

Referring to FIG. 15B, in operation S1520, the processor 1520 of the electronic device 1501 (for example, the second processor 423 of FIG. 4) may transfer a notification informing of registration or activation of the at least one geofence to the processor 1520 of the electronic device 1501 (for example, the first processor 421 of FIG. 4 or a third processor (for example, the third processor 425 of FIG. 4)) through the geofence management module 1531.

In operation S1522, the processor 1520 of the electronic device 1501 (for example, the third processor 425 of FIG. 4) may scan wireless communication signals around the electronic device 1501 through a communication circuit (for example, the communication circuit 440 of FIG. 4) and acquire surrounding wireless infrastructure information (for example, the surrounding wireless infrastructure information 600 of FIG. 6) from the surrounding wireless communication signals through a geofence module 1537 (for example, the geofence module 437 of FIG. 4).

In operation S1524, the processor 1520 of the electronic device 1501 (for example, the third processor 425 of FIG. 4) may identify whether the electronic device 1501 enters the at least one target geofence through the geofence module 1537. For example, the processor 1520 of the electronic device 1501 (for example, the third processor 425 of FIG. 4) may identify at least one of proximity, entry, or escape of the electronic device 1501 (for example, a geofence event type) with respect to the at least one target geofence on the basis of the location information of the at least one target geofence and the surrounding wireless infrastructure information.

When entry of the electronic device 1501 into the at least one geofence is identified (for example, geofence event type: entry (type 1)), the processor 1520 of the electronic device 1501 (for example, the third processor 425 of FIG. 4) may transfer a notification informing of the generation of the geofence event to the processor 1520 of the electronic device 1501 (for example, the first processor 421 of FIG. 4) in operation S1526.

In operation S1528, the processor 1520 of the electronic device 1501 (for example, the first processor 421 of FIG. 4) may identify marketing information of the at least one target geofence in the local marketing POI DB 435 through the geofence management module 1531. For example, the marketing information may include at least one marketing content item or an expiration date for each marketing content.

In operation S1530, the processor 1520 of the electronic device 1501 (for example, the first processor 421 of FIG. 4) may identify whether the expiration date included in the marketing information has passed through the geofence management module 1531. Operations S1532 and S1534 may be performed when the expiration date has passed in operation S1530, and operation S1536 may be performed without performance of operations S1532 and S1534 when the expiration date has not passed.

When it is identified that the expiration data included in the marketing information has passed through the geofence management module 1531, the processor 1520 of the electronic device 1501 (for example, the first processor 421 of FIG. 4) may make a request for the marketing information to the first server 1508 or a second server (for example, the second server 206 of FIG. 2) (for example, a marketing content server) in operation S1532.

In operation S1534, the processor 1520 of the electronic device 1501 (for example, the first processor 421 of FIG. 4) may receive the marketing information from the first server 208 or the second server 206 through the geofence management module 1531 in response to the request.

In operation S1536, the processor 1520 of the electronic device 1501 (for example, the first processor 421 of FIG. 4) may transfer the marketing information to a display 1550 (for example, the display 450 of FIG. 4) through the geofence management module 1531. For example, the marketing information may include visual data.

According to an embodiment, the processor 1520 of the electronic device 1501 (for example, the first processor 421 of FIG. 4) may transfer the marketing information to an audio module (for example, the audio module 170 of FIG. 1) or a sound output device (for example, the sound output device 155 of FIG. 1) (for example, a speaker or a headphone) of the electronic device 1501 through the geofence management module 1531. For example, the marketing information may include at least one piece of audio data or voice data.

In operation 1538, the processor 1520 of the electronic device 1501 (for example, the first processor 421 of FIG. 4) may display the marketing information on the display 1550.

According to an embodiment, the processor 1520 of the electronic device 1501 (for example, the first processor 421 of FIG. 4) may output the marketing information through the audio module (for example, the audio module 170 of FIG. 1) or the sound output device (for example, the sound output device 155 of FIG. 1) (for example, a speaker or a headphone) of the electronic device 1501.

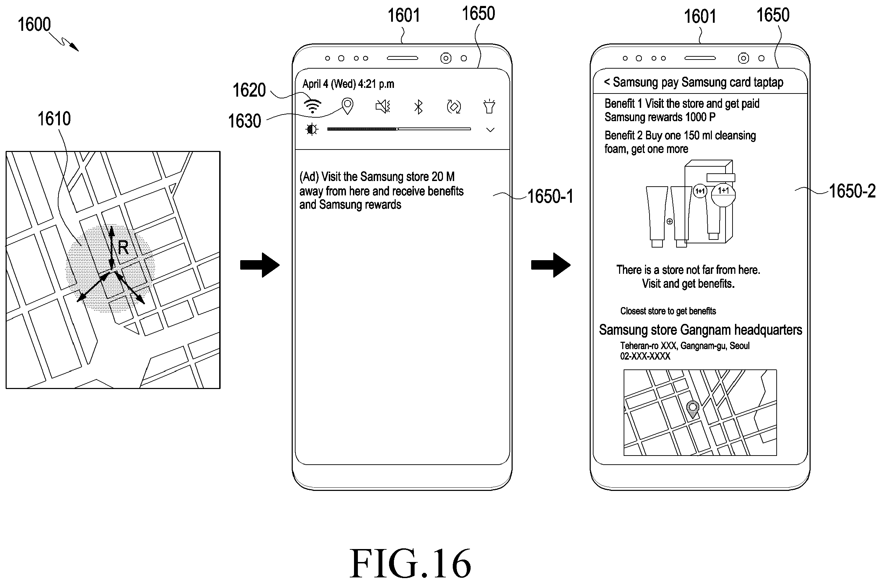

FIG. 16 is a diagram 1600 illustrating a user interface for dynamic geofencing by an electronic device according to various embodiments. An electronic device 1601 of FIG. 16 may include some or all of the electronic device 401 illustrated in FIG. 4.

Referring to FIG. 16, when provision of marketing information to the electronic device 1601 is agreed with on the basis of registration information of at least one marketing POI 1610 (for example, the marketing POI registration information 300 of FIG. 3) registered in a first server (for example, the first server 208 of FIG. 2) by a service provision device (for example, the service provision device 204 of FIG. 2) (for example, when a location-based icon 1630 in a status bar is activated), the electronic device 1601 may be configured to register or activate the at least one marketing POI 1610 in a geofence database (DB) (for example, the geofence DB 433) of the electronic device 1601 as at least one target geofence.

When it is configured to register or activate the at least one marketing POI 1610 as the at least one target geofence, a communication circuit (for example, the communication circuit 440 of FIG. 4) (for example, a Wi-Fi circuit) of the electronic device 1601 may be turned on to perform a geofence operation for the at least one target geofence 1610, and a wireless communication icon 1620 indicating the communication circuit 440 (for example, the Wi-Fi circuit) may be activated while the geofencing operation is performed. When the geofencing operation is completed, the electronic device 1601 may turn off the communication circuit 440 (for example, the Wi-Fi circuit), and accordingly, the wireless communication icon 1620 may be deactivated.

When the electronic device 1601 enters the configured geofence 1610 (for example, a store) (for example, R=20 m), the electronic device may display marketing information (for example, an event notification message) on a screen (for example, a first screen 1650-1) of a display 1650 (for example, the display 450 of FIG. 4) of the electronic device 1601. According to an embodiment, when the marketing information (for example, the event notification message) is selected, the electronic device 1601 may further display detailed information of the marketing information (for example, detailed event message) on a screen (for example, a second screen 1650-2) of the display 1650.

According to an embodiment, the marketing information (for example, the event notification message or a detailed event message) may include at least one piece of audio data or voice data. The marketing information may be output through the audio module (for example, the audio module 170 of FIG. 1) or the sound output device (for example, the sound output device 155 of FIG. 1) (for example, a speaker or a headphone) of the electronic device 1601.

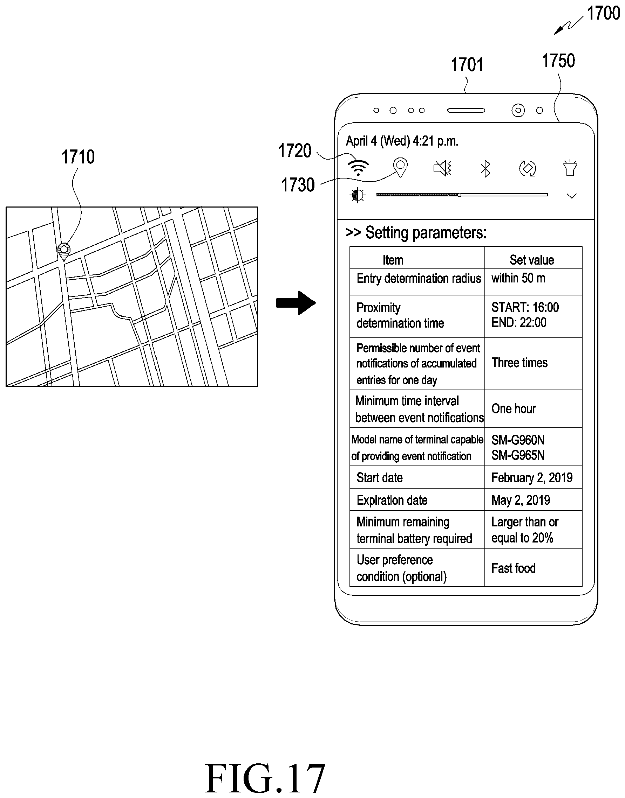

FIG. 17 is a diagram 1700 illustrating a user interface for dynamic geofencing by an electronic device according to various embodiments. An electronic device 1701 of FIG. 17 may include some or all of the electronic device 401 illustrated in FIG. 4.

Referring to FIG. 17, an embodiment of geofence configuration information (setting parameters) including a predetermined condition to register or activate at least one marketing POI 1710 located around the electronic device 1701 in a geofence database (DB) (for example, the geofence DB 433 of FIG. 4) of a memory (for example, the memory 430 of FIG. 4) of the electronic device 1701 as at least one target geofence is described.

For example, when provision of marketing information to the electronic device 1701 is agreed with on the basis of registration information of at least one marketing POI 1710 (for example, the marketing POI registration information 300 of FIG. 3) registered in a first server (for example, the first server 208 of FIG. 2) by a service provision device (for example, the service provision device 204 of FIG. 2) (for example, when the location-based icon 1630 in the status bar is activated), if the marketing POI 1710 satisfies the predetermined condition, the electronic device 1701 may be configured to register or activate the at least one marketing POI 1710 in a geofence database (DB) (for example, the geofence DB 433) of the electronic device 1701 as at least one target geofence.

When it is configured to register or activate the at least one marketing POI 1710 as the at least one target geofence, a communication circuit (for example, the communication circuit 440 of FIG. 4) (for example, a Wi-Fi circuit) of the electronic device 1710 may be turned on to perform a geofence operation for the at least one target geofence 1710, and a wireless communication icon 1720 indicating the communication circuit 440 (for example, the Wi-Fi circuit) may be activated while the geofencing operation is performed. When the geofencing operation is completed, the electronic device 1701 may turn off the communication circuit 440 (for example, the Wi-Fi circuit), and accordingly, the wireless communication icon 1720 may be deactivated.

According to an embodiment, the geofence configuration information including the predetermined condition for the marketing POI 1710 may include at least one of, for example, an entry determination radius (for example, a geofence radius), a proximity determination time, the permissible number of notifications of an accumulated entry event for one day, a minimum time interval between event notifications, an event notification terminal model name (for example, a device type), a start date, an expiration date, a minimum remaining terminal battery required, or a user preference condition (for example, a preferred category designated by the user).

According to an embodiment, the geofence configuration information may be configured by an advertiser of a service provision device (for example, the service provision device 204 of FIG. 2) (for example, an electronic device of the advertiser) providing marketing information of the at least one marketing POI 1710 or configured by a user of the electronic device 1701. For example, items including the minimum remaining terminal battery required or the user preference condition may be configured by the user of the electronic device 1701. The remaining items other than the minimum remaining terminal battery required or the user preference condition may be configured by the user of the electronic device 1701 or the advertiser of the service provision device 204.

According to an embodiment, when the configuration information is configured by the advertiser of the service provision device 204, the configuration information may be automatically configured, changed, or updated on the basis of information on at least one marketing POI 1710 (for example, marketing POI information) received from a first server (for example, the first server 208 of FIG. 2) (for example, a proximity-based marketing server) or registration information of the at least one marketing POI 1710 (for example, the marketing POI registration information 300 of FIG. 3).

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program 140) including one or more instructions that are stored in a storage medium and where the data is temporarily stored in the storage medium.medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:

   a display;
   a communication circuit;
   at least one memory; and
   at least one processor,

wherein the at least one memory stores instructions configured to, when executed, cause the at least one processor to:

store information on at least one marketing Point of Interest (POI) received from a first server through the communication circuit in the at least one memory,
identify at least one surrounding POI located around the electronic device among the at least one marketing POI, based on first location information of the electronic device,
configure a surrounding marketing POI as a target geofence, which satisfies a predetermined condition, among the at least one surrounding marketing POI, and
display marketing information corresponding to the target geofence on the display in response to identification of entry of the electronic device into the target geofence.

2. The electronic device of claim 1, wherein the information on the at least one marketing POI includes at least some pieces of identification information of each marketing POI, geofence configuration information, a predetermined condition, or marketing information, and
wherein the predetermined condition includes at least one of a time period, a frequency or number of times, a time interval, a device type, or a duplication prevention category, designated to register or activate the target geofence for each marketing POI.

3. The electronic device of claim 1, wherein the instructions are configured to cause the at least one processor to:

identify whether the surrounding marketing POI satisfies the predetermined condition among the at least one surrounding marketing POI,
identify whether the surrounding marketing POI has a history of being registered or stored as a geofence in the at least one memory when the marketing POI satisfies the predetermined condition,
activate the surrounding marketing POI as the target geofence when the surrounding marketing POI has the history of being registered or stored as the geofence, and
register the surrounding marketing POI as the geofence and activate the surrounding marketing POI as the target geofence in the at least one memory when the surrounding marketing POI has no history of being registered or stored as the geofence.

4. The electronic device of claim 3, wherein the instructions are configured to cause the at least one processor to:

identify whether the predetermined condition for the target geofence ends after the surrounding marketing POI is activated as the target geofence, and
when the end of the predetermined condition for the target geofence is identified, deactivate of the target geofence.

5. The electronic device of claim 1, wherein the instructions are configured to cause the at least one processor to:

identify the marketing information included in information on the surrounding marketing POI corresponding to the target geofence in response to identification of entry of the electronic device into the target geofence, and
display the marketing information on the display.

6. The electronic device of claim 1, wherein the instructions are configured to cause the at least one processor to:

request marketing information corresponding to the target geofence of which an expiration date has passed to the first server or a second server through the communication circuit, based on passing of the expiration date included in the marketing information, and
receive the marketing information corresponding to the target geofence of which the expiration date has passed from the first server or the second server through the communication circuit in response to the request.

7. The electronic device of claim 1, wherein the instructions are configured to cause the at least one processor to store information on the at least one marketing POI in the at least one memory to correspond to a plurality of geographical areas divided to have a predetermined size, based on location information of the at least one marketing POI.

8. The electronic device of claim 7, wherein the instructions are configured to cause the at least one processor to:

identify whether there is at least one first geographical area having no registration history of information on a marketing POI within first geographical areas having a first size corresponding to the first location information among the plurality of geographical areas,

request information on at least one marketing POI corresponding to the first location information or first central location information of the at least one first geographical area to the first server through the communication circuit when there is at least one first geographical area, and, in response to the request,

update the at least one memory by registering or storing information on at least one marketing POI corresponding to the first location information or the first central location information of the at least one first geographical area received from the first server to make the information on the at least one marketing POI correspond to the at least one first geographical area.

9. The electronic device of claim 8, wherein the instructions are configured to cause the at least one processor to:

acquire second location information of the electronic device,

identify whether the electronic device moves within the plurality of geographical areas, based on the first location information and the second location information,

identify whether there is at least one second geographical area having no registration history of information on a marketing POI within second geographical areas having a second size corresponding to the second location information among the plurality of geographical areas when the movement is identified,

request information on at least one marketing POI corresponding to the second location information or second central location information of the at least one second geographical area to the first server through the communication circuit when there is at least one second geographical area, and

in response to the request, update the at least one memory by registering the information on the at least one marketing POI corresponding to the second location information or the second central location information received from the first server to make the information on the at least one marketing POI correspond to the at least one second geographical area.

10. A method of performing dynamic geofencing by an electronic device, the method comprising:

storing information on at least one marketing Point of Interest (POI) received from a first server through a communication circuit in at least one memory of the electronic device;

identifying at least one surrounding POI located around the electronic device among the at least one marketing POI, based on first location information of the electronic device;

configuring a surrounding marketing POI, which satisfies a predetermined condition, among the at least one surrounding marketing POI as a target geofence; and

displaying marketing information corresponding to the target geofence on a display in response to identification of entry of the electronic device into the target geofence.

11. The method of claim 10, wherein the configuring of the surrounding marketing POI as the target geofence comprises:

identifying whether the surrounding marketing POI satisfies the predetermined condition among the at least one surrounding marketing POI;

identifying whether the surrounding marketing POI has a history of being registered or stored as a geofence in the at least one memory when the marketing POI satisfies the predetermined condition;

activating the surrounding marketing POI as the target geofence when the surrounding marketing POI has the history of being registered or stored as the geofence; and

registering the surrounding marketing POI as at least one geofence and activating the surrounding marketing POI as the target geofence in the at least one memory when the surrounding marketing POI has no history of being registered or stored as the geofence.

12. The method of claim 10, further comprising:

requesting marketing information corresponding to the target geofence of which an expiration date has passed to the first server or a second server through the communication circuit, based on passing of the expiration date included in the marketing information; and

receiving the marketing information corresponding to the target geofence of which the expiration date has passed from the first server or the second server through the communication circuit in response to the request.

**13.** The method of claim 10, wherein the storing of the information on the at least one marketing POI in the at least one memory comprises storing the information on the at least one marketing POI in the at least one memory to correspond to a plurality of geographical areas divided to have a predetermined size, based on location information of the at least one marketing POI.

**14.** The method of claim 13, further comprising:

identifying whether there is at least one first geographical area having no registration history of information on a marketing POI within first geographical areas having a first size corresponding to the first location information among the plurality of geographical areas;

requesting information on at least one marketing POI corresponding to the first location information or first central location information of the at least one first geographical area to the first server through the communication circuit when there is at least one first geographical area; and

updating, in response to the request, the at least one memory by registering or storing information on at least one marketing POI corresponding to the first location information or the first central location information of the at least one first geographical area received from the first server through the communication circuit to make the information on the at least one marketing POI correspond to the at least one first geographical area.

**15.** A computer-readable recording medium for recording a program to be executed in a computer, the program comprising executable instructions configured to, when executed, cause a processor to:

store information on at least one marketing Point of Interest (POI) received from a first server through a communication circuit in at least one memory of an electronic device,

identify at least one surrounding POI located around the electronic device among the at least one marketing POI, based on first location information of the electronic device,

configure a surrounding marketing POI, which satisfies a predetermined condition, among the at least one surrounding marketing POI as a target geofence, and

display marketing information corresponding to the target geofence on a display in response to identification of entry of the electronic device into the target geofence.

FIG.1

200

208

**FIRST SERVER**

210
**COMMUNICATION CIRCUIT**

230
**MEMORY**

230F
**GEOFENCE MARKETING PLATFORM**

235
**MARKETING POI DB**

237
**MARKETING CONTENT DB**

220
**PROCESSOR**

231
**MARKETING POI MANAGEMENT MODULE**

233
**MARKETING CONTENT MANAGEMENT MODULE**

MAKE REQUEST FOR AND TRANSMIT MARKETING POI INFORMATION

MARKETING POI REGISTRATION INFORMATION

299
**NETWORK**

204
**SERVICE PROVISION DEVICE**

201
**PLURALITY OF ELECTRONIC DEVICES**

201-1    201-2    201-3    201-n
298      298      . . .

206
**SECOND SERVER**

MAKE REQUEST FOR AND TRANSMIT MARKETING CONTENT

# FIG.2

300

| 310 | 320 | 330 | 340 |
|-----|-----|-----|-----|
| MARKETING POI ID | GEOFENCE CONFIGURATION INFORMATION | PREDETERMINED CONDITION | MARKETING INFORMATION |

# FIG.3

400

401

ELECTRONIC DEVICE

440
COMMUNICATION CIRCUIT

441
FIRST COMMUNICATION CIRCUIT

443
SECOND COMMUNICATION CIRCUIT

450
DISPLAY

420
PROCESSOR

421
FIRST PROCESSOR

423
SECOND PROCESSOR

425
THIRD PROCESSOR

410
POSITIONING DEVICE

430
MEMORY

431
GEOFENCE MANAGEMENT MODULE

433
GEOFENCE DB

437
GEOFENCE MODULE

435
LOCAL MARKETING POI DB

# FIG.4

510     520         530             540      500

| | LATITUDE AND LONGITUDE COORDINATES [°N, °E] | WLAN Fingerprint | | | SERVICE PROFILE | |
|---|---|---|---|---|---|---|
| GEOFENCE 1 | (37.6, 126.9) | BSSID | RSSI [dBm] | Channel Index | Range | < 20 m |
| | | AA:BB:CC:11:22:33 | -60 | 6 | Latency | < 1 min |
| | | AA:BB:CC:77:88:99 | -78 | 11 | Event Type | ENTRY (FOR EXAMPLE, TYPE 1) ESCAPE (FOR EXAMPLE, TYPE 0) |
| | | AA:BB:CC:44:55:66 | -72 | 48 | | |

## FIG.5

610          620          630      600

| | BSSID | RSSI [dBm] | Channel Index |
|---|---|---|---|
| 1 | AA:BB:CC:11:22:33 | -65 | 6 |
| 2 | AA:BB:CC:00:00:00 | -78 | 9 |
| 3 | AA:BB:CC:77:88:99 | -80 | 11 |
| 4 | AA:BB:CC:44:55:66 | -70 | 48 |
| 5 | AA:BB:CC:11:11:11 | -75 | 44 |

## FIG.6

FIG.7

/800

START

STORE INFORMATION ON AT LEAST ONE MARKETING POI RECEIVED FROM FIRST SERVER IN MEMORY — 810

IDENTIFY AT LEAST ONE SURROUNDING MARKETING POI LOCATED AROUND ELECTRONIC DEVICE AMONG AT LEAST ONE MARKETING POI, BASED ON FIRST LOCATION INFORMATION OF ELECTRONIC DEVICE — 820

CONFIGURE SURROUNDING MARKETING POI WHICH SATISFIES PREDETERMINED CONDITION AMONG AT LEAST ONE SURROUNDING MARKETING POI AS TARGET GEOFENCE — 830

DISPLAY MARKETING INFORMATION CORRESPONDING TO TARGET GEOFENCE WHEN ENTRY OF ELECTRONIC DEVICE INTO TARGET GEOFENCE IS IDENTIFIED — 840

END

FIG.8

START

900

910

IS PREDETERMINED
CONDITION SATISFIED?

NO

YES

920

IS THERE GEOFENCE
REGISTRATION OR STORAGE
HISTORY?

NO

925

REGISTER GEOFENCE

YES

ACTIVATE GEOFENCE AS
TARGET GEOFENCE

930

940

DOES PREDETERMINED
CONDITION END?

NO

YES

DEACTIVATE TARGET GEOFENCE

950

END

FIG.9

START

1000

NO ← DOES ELECTRONIC DEVICE ENTER TARGET GEOFENCE? ⌐1010

YES

IDENTIFY MARKETING INFORMATION ~1020

1030

NO ← HAS EXPIRATION DATE PASSED?

YES

MAKE REQUEST FOR MARKETING INFORMATION TO FIRST SERVER OR SECOND SERVER ~1040

RECEIVE MARKETING INFORMATION ~1050

PROVIDE MARKETING INFORMATION ~1060

END

FIG.10

START

1100

STORE INFORMATION ON AT LEAST ONE MARKETING POI TO CORRESPOND TO PLURALITY OF GEOGRAPHICAL AREAS DIVIDED TO HAVE PREDETERMINED SIZE, BASED ON LOCATION INFORMATION OF AT LEAST ONE MARKETING POI ⌐1110

IDENTIFY WHETHER THERE IS AT LEAST ONE FIRST GEOGRAPHICAL AREA HAVING NO REGISTRATION OR STORAGE HISTORY OF MARKETING POI CORRESPONDING TO FIRST LOCATION ⌐1120

MAKE REQUEST FOR INFORMATION ON AT LEAST ONE MARKETING POI TO FIRST SERVER WHEN THERE IS AT LEAST ONE FIRST GEOGRAPHICAL AREA ⌐1130

STORE OR UPDATE INFORMATION ON AT LEAST ONE MARKETING POI RECEIVED FROM FIRST SERVER TO MAKE SAME CORRESPOND TO AT LEAST ONE FIRST GEOGRAPHICAL AREA IN RESPONSE TO REQUEST ⌐1140

END

FIG.11

1200

START

ACQUIRE SECOND LOCATION
INFORMATION OF ELECTRONIC DEVICE — 1210

1220
DOES ELECTRONIC DEVICE MOVE? NO

YES

IDENTIFY WHETHER THERE IS AT LEAST ONE SECOND
GEOGRAPHICAL AREA HAVING NO REGISTRATION OR STORAGE
HISTORY OF INFORMATION ON MARKETING POI CORRESPONDING
TO SECOND LOCATION INFORMATION — 1230

MAKE REQUEST FOR INFORMATION ON AT LEAST ONE
MARKETING POI TO FIRST SERVER WHEN THERE IS
AT LEAST ONE SECOND GEOGRAPHICAL AREA — 1240

STORE OR UPDATE INFORMATION ON AT LEAST ONE MARKETING
POI RECEIVED FROM FIRST SERVER IN RESPONSE TO REQUEST
TO MAKE SAME CORRESPOND TO AT LEAST
ONE SECOND GEOGRAPHICAL AREA — 1250

END

FIG.12

```
                                                    ⟋1300
                  ┌─────────────┐
                  │    START    │
                  └─────────────┘
                         │
                         ▼
        ┌─────────────────────────────────────┐
        │      IDENTIFY FIRST GEOGRAPHICAL AREA │
        │   CORRESPONDING TO FIRST LOCATION AMONG │──── 1310
        │      PLURALITY OF GEOGRAPHICAL AREAS  │
        └─────────────────────────────────────┘
                         │
                         ▼
        ┌─────────────────────────────────────┐
        │    IDENTIFY SECOND GEOGRAPHICAL AREA  │
        │  CORRESPONDING TO SECOND LOCATION AMONG │──── 1320
        │      PLURALITY OF GEOGRAPHICAL AREAS  │
        └─────────────────────────────────────┘
                         │
                         ▼
        ┌─────────────────────────────────────┐
        │  IDENTIFY WHETHER FIRST INDEX VALUE OF FIRST │
        │   GEOGRAPHICAL AREA MATCHES SECOND INDEX │──── 1330
        │    VALUE OF SECOND GEOGRAPHICAL AREA   │
        └─────────────────────────────────────┘
                         │
                         ▼
        ┌─────────────────────────────────────┐
        │  IDENTIFY THAT ELECTRONIC DEVICE MOVES WHEN │
        │   FIRST AND SECOND INDEXES DO NOT MATCH │──── 1340
        └─────────────────────────────────────┘
                         │
                         ▼
                  ┌─────────────┐
                  │     END     │
                  └─────────────┘
```

# FIG.13

~1400

START

RECEIVE REGISTRATION INFORMATION OF AT LEAST ONE MARKETING POI FROM SERVICE PROVISION DEVICE ~1410

COLLECT SURROUNDING WIRELESS INFRASTRUCTURE INFORMATION OF AT LEAST ONE MARKETING POI THROUGH COMMUNICATION CIRCUIT ~1420

STORE INFORMATION ON AT LEAST ONE MARKETING POI IN MEMORY, BASED ON REGISTRATION INFORMATION OR SURROUNDING INFRASTRUCTURE INFORMATION ~1430

RECEIVE REQUEST FOR INFORMATION ON AT LEAST ONE MARKETING POI FROM AT LEAST ONE EXTERNAL ELECTRONIC DEVICE ~1440

TRANSMIT INFORMATION ON AT LEAST ONE MARKETING POI TO AT LEAST ONE EXTERNAL ELECTRONIC DEVICE ~1450

END

# FIG.14

FIG.15A

EP 3 940 620 A1

**FIG.15B**

FIG.16

1700

1701    1750

April 4 (Wed) 4:21 p.m.

1720

1730

>> Setting parameters:

1710

| Item | Set value |
|---|---|
| Entry determination radius | within 50 m |
| Proximity determination time | START: 16:00 END: 22:00 |
| Permissible number of event notifications of accumulated entries for one day | Three times |
| Minimum time interval between event notifications | One hour |
| Model name of terminal capable of providing event notification | SM-G960N SM-G965N |
| Start date | February 2, 2019 |
| Expiration date | May 2, 2019 |
| Minimum remaining terminal battery required | Larger than or equal to 20% |
| User preference condition (optional) | Fast food |

FIG.17

## INTERNATIONAL SEARCH REPORT

| International application No. |
| --- |
| **PCT/KR2020/003538** |

**A.    CLASSIFICATION OF SUBJECT MATTER**

*G06Q 30/02(2012.01)i, H04W 4/021(2018.01)i*

According to International Patent Classification (IPC) or to both national classification and IPC

**B.    FIELDS SEARCHED**

Minimum documentation searched (classification system followed by classification symbols)
G06Q 30/02; H04W 4/02; H04W 4/12; H04W 4/20; H04W 4/021

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: geofencing, position, condition, advertisement

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2018-0126259 A (SAMSUNG ELECTRONICS CO., LTD.) 27 November 2018<br>See paragraphs [0028]-[0057], [0074]-[0113] and figures 1, 2. | 1-15 |
| Y | JP 2018-129077 A (XAD INC.) 16 August 2018<br>See paragraphs [0028]-[0057], [0074]-[0113] and figures 1, 2. | 1-15 |
| Y | KR 10-2017-0093945 A (HUAWEI TECHNOLOGIES CO., LTD.) 16 August 2017<br>See paragraph [0101] and figure 4. | 3,4,11 |
| Y | KR 10-2016-0108596 A (GOOGLE INC.) 19 September 2016<br>See paragraph [0070] and claim 1. | 9 |
| A | KR 10-1714336 B1 (EBAY INC.) 08 March 2017<br>See claims 1-16 and figures 1-3. | 1-15 |

| ☐  Further documents are listed in the continuation of Box C. | ☒  See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 JUNE 2020 (15.06.2020) | **15 JUNE 2020 (15.06.2020)** |

| Name and mailing address of the ISA/KR<br>Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Authorized officer<br><br>Telephone No. |
| --- | --- |

Form PCT/ISA/210 (second sheet) (January 2015)

INTERNATIONAL SEARCH REPORT
Information on patent family members

International application No.

PCT/KR2020/003538

| Patent document cited in search report | Publication date | Patent family member | Publication date |
|---|---|---|---|
| KR 10-2018-0126259 A | 27/11/2018 | US 2020-0045497 A1 | 06/02/2020 |
| | | WO 2018-212607 A1 | 22/11/2018 |
| JP 2018-129077 A | 16/08/2018 | EP 3146753 A1 | 29/03/2017 |
| | | EP 3146753 B1 | 01/01/2020 |
| | | JP 2017-525062 A | 31/08/2017 |
| | | JP 2018-136968 A | 30/08/2018 |
| | | JP 2018-206412 A | 27/12/2018 |
| | | JP 2019-220193 A | 26/12/2019 |
| | | JP 6386170 B2 | 05/09/2018 |
| | | JP 6553237 B2 | 31/07/2019 |
| | | JP 6559287 B2 | 14/08/2019 |
| | | JP 6636106 B2 | 29/01/2020 |
| | | US 2014-0128104 A1 | 08/05/2014 |
| | | US 2014-0129293 A1 | 08/05/2014 |
| | | US 2014-0129566 A1 | 08/05/2014 |
| | | US 2015-0332325 A1 | 19/11/2015 |
| | | US 2015-0332329 A1 | 19/11/2015 |
| | | US 2016-0019592 A1 | 21/01/2016 |
| | | US 2018-0158108 A1 | 07/06/2018 |
| | | US 2018-0199152 A1 | 12/07/2018 |
| | | US 9049549 B2 | 02/06/2015 |
| | | US 9210540 B2 | 08/12/2015 |
| | | US 9886703 B2 | 06/02/2018 |
| | | WO 2015-179447 A1 | 26/11/2015 |
| KR 10-2017-0093945 A | 16/08/2017 | CN 106465054 A | 22/02/2017 |
| | | CN 106465054 B | 20/08/2019 |
| | | EP 3226587 A1 | 04/10/2017 |
| | | EP 3226587 B1 | 20/02/2019 |
| | | JP 2018-510521 A | 12/04/2018 |
| | | JP 6474011 B2 | 27/02/2019 |
| | | US 2017-0359685 A1 | 14/12/2017 |
| | | US 9900741 B2 | 20/02/2018 |
| | | WO 2016-095120 A1 | 23/06/2016 |
| KR 10-2016-0108596 A | 19/09/2016 | CA 2917004 A1 | 31/12/2014 |
| | | CN 105474671 A | 06/04/2016 |
| | | CN 105474671 B | 16/02/2018 |
| | | CN 108134982 A | 08/06/2018 |
| | | EP 3014907 A1 | 04/05/2016 |
| | | EP 3014907 B1 | 10/10/2018 |
| | | EP 3445102 A1 | 20/02/2019 |
| | | EP 3445103 A1 | 20/02/2019 |
| | | JP 2016-528564 A | 15/09/2016 |
| | | JP 2017-084411 A | 18/05/2017 |
| | | JP 2019-003689 A | 10/01/2019 |
| | | JP 6084714 B2 | 22/02/2017 |
| | | JP 6408043 B2 | 17/10/2018 |

Form PCT/ISA/210 (patent family annex) (January 2015)

| Patent document cited in search report | Publication date | Patent family member | Publication date |
|---|---|---|---|
| | | KR 10-1656031 B1 | 08/09/2016 |
| | | KR 10-2016-0018838 A | 17/02/2016 |
| | | US 10149097 B2 | 04/12/2018 |
| | | US 2015-0005012 A1 | 01/01/2015 |
| | | US 2015-0264527 A1 | 17/09/2015 |
| | | US 2017-0142550 A1 | 18/05/2017 |
| | | US 2018-0014155 A1 | 11/01/2018 |
| | | US 8755824 B1 | 17/06/2014 |
| | | US 8798646 B1 | 05/08/2014 |
| | | US 9049555 B2 | 02/06/2015 |
| | | US 9596563 B2 | 14/03/2017 |
| | | US 9788159 B2 | 10/10/2017 |
| | | WO 2014-210228 A1 | 31/12/2014 |
| KR 10-1714336 B1 | 08/03/2017 | AU 2014-360332 A1 | 16/06/2016 |
| | | AU 2014-360332 B2 | 14/07/2016 |
| | | AU 2016-101804 A4 | 10/11/2016 |
| | | CA 2931531 A1 | 11/06/2015 |
| | | CN 105934650 A | 07/09/2016 |
| | | CN 105934650 B | 05/09/2017 |
| | | CN 107396317 A | 24/11/2017 |
| | | EP 3074723 A1 | 05/10/2016 |
| | | KR 10-1832798 B1 | 27/02/2018 |
| | | KR 10-1922390 B1 | 26/11/2018 |
| | | KR 10-1958614 B1 | 14/03/2019 |
| | | KR 10-2017-0027873 A | 10/03/2017 |
| | | KR 10-2018-0017235 A | 20/02/2018 |
| | | KR 10-2018-0126095 A | 26/11/2018 |
| | | KR 10-2019-0026981 A | 13/03/2019 |
| | | KR 10-2020-0021562 A | 28/02/2020 |
| | | KR 10-2082358 B1 | 27/02/2020 |
| | | US 2015-0163629 A1 | 11/06/2015 |
| | | US 2016-0198298 A1 | 07/07/2016 |
| | | US 2018-0234794 A1 | 16/08/2018 |
| | | US 9307359 B2 | 05/04/2016 |
| | | US 9967706 B2 | 08/05/2018 |
| | | WO 2015-085176 A1 | 11/06/2015 |

Form PCT/ISA/210 (patent family annex) (January 2015)